# EUROPEAN PATENT SPECIFICATION

(11) **EP 4 260 587 B1**
(45) Date of publication and mention of the grant of the patent: **04.03.2026**
(21) Application number: 20967912.5
(22) Date of filing: 31.12.2020
(51) Int. Cl.: H04W 12/03, H04W 12/041, H04L 9/32, H04W 4/48, H04L 9/08, H04L 9/40, H04W 4/40, H04W 12/069, H04W 12/61

(54) **KEY PROVISIONING METHOD AND RELATED PRODUCTS**
SCHLÜSSELBEREITSTELLUNGSVERFAHREN UND ZUGEHÖRIGE PRODUKTE
PROCÉDÉ DE FOURNITURE DE CLÉ ET PRODUITS ASSOCIÉS

(43) Date of publication of application: 18.10.2023
(73) Proprietor: Shenzhen Yinwang Intelligent Technologies Co., Ltd., Shenzhen, Guangdong 518129 (CN)
(72) Inventor: KANG, Suk In, Singapore 138589 (SG); WEI, Zhuo, Singapore 138589 (SG); ZHONG, Steven Yin, Singapore 138589 (SG)
(74) Representative: Maiwald GmbH
(86) International application number: PCT/CN2020/142507
(87) International publication number: WO 2022/141574

(56) References cited:
- EP-A1- 3 474 488
- WO-A1-2020/139399
- WO-A1-2020/139400
- WO-A2-2018/057321
- CN-A- 105 187 376
- CN-A- 108 259 465
- US-B1- 9 215 228

## Description

### TECHNICAL FIELD

The present disclosure relates to the technical field of V2X technologies, and in particular, to a key provisioning method and related products.

### BACKGROUND

Vehicle-to-everything (V2X), which may refer to vehicle-to-vehicle (V2V) and vehicle-to-Infrastructure (V2I) communications, is a wireless technology aimed at enabling data exchanges between a vehicle and its surroundings.

Among multiple applications related to the V2X technology, more and more attention is drawn to the security issues of the vehicle, one of those issues may be key provisioning for a vehicle. The key provisioning represents specific works to set initial secret keys to devices inside the vehicle. Sometimes a key provisioning process is also called as "key setting", "key distribution", "key initialization", or "key configuration", where the key implies some secret information used for data confidentiality and integrity or used to protect the other secret keys. Those terms are used herein in an interchangeable manner unless otherwise specified.

With increased cyber attackers, these key settings have become essential. Especially, every vehicle has to have a unique key to minimize security impact, i.e., even though an attacker obtains a key of a vehicle, it should not affect the other vehicles. Additionally, current vehicles have lots of devices and applications for autonomous driving and connected car functionalities, and have separated networks based on gateways for enhancing security. Accordingly it requires lots of secret keys to be set to each device.

This background information is provided to reveal information believed by the applicant to be of possible relevance to the present disclosure. No admission is necessarily intended, nor should be construed, that any of the preceding information constitutes prior art against the present disclosure.

EP 3 474 488 A1 describes a method to appropriately issue a public key certificate to an automobile, an ECU, or an application installed in the ECU. US 9 215 228 B1 describes a system authenticates in-vehicle electronic devices having unequal capabilities such as having varying different communication and processing capabilities.

### SUMMARY

In view of the above, in order to solve the above problem, the present disclosure provides a key provisioning method and related products.

The foregoing and other objects are achieved by the subject matter of the independent claims. Further implementation forms are apparent from the dependent claims, the description and the figures.

A first aspect the present disclosure relates to a key provisioning method as set out in claim 1.

According to the solution provided by the present disclosure, all first devices, for example, all ECU devices in a vehicle can be provisioned with a group key by virtue of one provisioning message containing provisioning data. In this way, the efficiency for key provisioning is improved, and the provisioning cost is reduced. By using the generated group key, security of the data communication associated with the ECU device is ensured. Moreover, reduced data size with limited information is achieved due to self-generation of keys at the ECU device, and it is also possible to set the keys for multiple devices at the same time. It should be noted that the first device may be any device that is mounted in the vehicle, ECU devices are just taken as an example in the description for illustration purpose. Besides, the group key here is shared among the first devices in the same vehicle, but first devices on different vehicles have different group keys.

In a possible implementation form of the method according to the first aspect as such, the determining, based on the access request, whether the second device is permitted to access the first device includes: sending to the second device an authentication request for verifying an authority of the second device; receiving from the second device an access token matched with the authentication request; determining whether the received access token is valid; where the sending the access response to the second device based on the determination includes: upon determining that the received access token is valid, sending a positive access response to the second device; and upon determining that the received access token is invalid, sending a negative access response to the second device.

The token-based authentication provides not only end-to-end security between vehicle devices and the KMS server, but key independence for each vehicle and key authentication from signature of KMS.

In a possible implementation form of the method according to the first aspect as such, the method further includes: upon triggering of the access request, sending a first provisioning response to the second device; receiving from the second device a provisioning request for provisioning a functional secret key for the first device; generating the functional secret key based on the group key and pre-stored data; and sending a second provisioning response to the second device.

A functional secret key may be further generated based on the generated group key, with the functional secret key, self-generation of the functional secret key by each ECU of some particular group (which can be distinguished as its application or purpose such as secure on-board communication (SecOC) and transport layer secure (TLS)) renders it possible to distinguish the ECU devices in terms of functions and provides more flexibility in secure communications in a vehicle.

In a possible implementation form of the method according to the first aspect as such, the method further includes: receiving a key confirmation challenge from a third device, where the key confirmation challenge is sent by the third device upon receiving from the second device a key confirmation request for confirming whether the functional secret key is generated correctly; generating a key confirmation response according to the key confirmation challenge, the functional secret key and a second pre-defined algorithm; and sending the key confirmation response to the third device.

When the functional secret key is generated by the ECU device, the generated functional secret key should be verified by the gateway so as to ensure that the functional secret key is generated correctly by the ECU device.

A second aspect of the present disclosure relates to a key provisioning method as set out in claim 8.

In a possible implementation form of the method according to the second aspect as such, before the sending to the first device the access request for requesting to access the first device, the method further includes: sending to a server a token request for requesting an access token corresponding to the group key, where the token request includes one or more identities of vehicles which the second device plans to provision and a vehicle to which the first device belongs is included in the vehicles; and receiving from the server the access token corresponding to the group key and a second provisioning message corresponding to the access token.

In a possible implementation form of the method according to the second aspect as such, before the receiving the access response from the first device, the method further includes: receiving from the first device an authentication request for verifying an authority of the second device; determining an access token matched with the authentication request; and sending the access token matched with the authentication request to the first device.

In a possible implementation form of the method according to the second aspect as such, where the determining the access token matched with the authentication request includes: determining a provisioning state of the first device according to the authentication request; and upon determining that the group key of the first device is not generated by the first device, using the access token corresponding to the group key as the access token matched with the authentication request.

In a possible implementation form of the method according to the second aspect as such, where the receiving the access response from the first device includes: receiving a negative access response from the first device; before the sending the first provisioning message to the first device, the method further includes: sending to the server a token update request for updating an access token for the first device, and receiving from the server an updated access token as the access token corresponding to the group key.

In a possible implementation form of the method according to the second aspect as such, the method further includes: receiving a first provisioning response from the first device; when the first provisioning response indicates that the group key is successfully generated by the first device, sending a provisioning request for provisioning a functional secret key for the first device; and receiving a second provisioning response from the first device.

In a possible implementation form of the method according to the second aspect as such, sending to the server a request for requesting an access token for a replacement device of the first device, receiving from the server an access token corresponding to the group key; and using the received access token to provision the replacement device. In a possible implementation, the access token may include an identity of the replacement device, so that the second device can use this access token to access the replacement device. Here the provisioning of the replacement device may be done in a way as same as the provisioning of the first device.

In a possible implementation form of the method according to the second aspect as such, the method further includes: sending to the server a request for requesting a functional secret access token for updating a functional secret key of the first device, receiving the functional secret access token and corresponding update data from the server; and updating the functional secret key of the first device. Here the updating of the functional secret key may be done in a way as same as the provisioning of the functional secret key for the first device.

A third aspect of the present disclosure relates to a key provisioning method, which does not form part of the claims.

A fourth aspect of the present disclosure relates to a first device in accordance with claim 13.

A fifth aspect of the present disclosure relates to a second device in accordance with claim 14.

A sixth aspect, which does not form part of the claims, of the present disclosure relates to a server, including a receiving module and a sending module. The receiving module is configured to receive from a fourth device a configuration request for configuring a first device, where the configuration request includes an identity of a vehicle to which the first device belongs and the first device is mounted in the vehicle; and the sending module is configured to send to the fourth device local provisioning data, where the local provisioning data is configured for generation of a group key for the first device, and the group key is shared among first devices in the vehicle.

A seventh aspect of the present disclosure relates to a first device, including a memory, a processor, an input interface, and an output interface. The memory, the processor, the input interface, and the output interface are connected by a bus system. The memory is configured to store an instruction, and the processor is configured to execute the instruction stored in the memory for performing the method in the above-mentioned first aspect or any possible implementation of the first aspect.

An eighth aspect of the present disclosure relates to a second device, including a memory, a processor, an input interface, and an output interface. The memory, the processor, the input interface, and the output interface are connected by a bus system. The memory is configured to store an instruction, and the processor is configured to execute the instruction stored in the memory for performing the method in the above-mentioned second aspect or any possible implementation of the second aspect.

A ninth aspect which does not form part of the claims, of the present disclosure relates to a server, including a memory, a processor, an input interface, and an output interface. The memory, the processor, the input interface, and the output interface are connected by a bus system. The memory is configured to store an instruction, and the processor is configured to execute the instruction stored in the memory for performing the method in the above-mentioned third aspect or any possible implementation of the third aspect.

A tenth aspect, which does not form part of the claims, of the present disclosure relates to a computer storage medium storing computer executable instructions which, when being executed, implement the method according to the first, the second or the third aspect of the present disclosure and any possible implementation thereof.

An eleventh aspect, which does not form part of the claims, of the present disclosure relates to a computer program product is provided, including an instruction which when executed on a computer, causes a computer to perform the method in the above-mentioned first, the second or the third aspect or any possible implementation thereof.

### BRIEF DESCRIPTION OF DRAWINGS

FIG. 1 shows keys provided by an embodiment of the preset disclosure.
FIG. 2a shows a key provisioning system according to an embodiment of the present disclosure.
FIG. 2b shows a general provisioning process with respect to the key provisioning system shown in FIG. 2a according to an embodiment of the present disclosure.
FIG. 3a and FIG. 3b show schematic flowcharts of first device configuration in a key provisioning method according to an embodiment of the present disclosure.
FIG. 4a and FIG. 4b show schematic flowcharts of second device configuration in a key provisioning method according to an embodiment of the present disclosure.
FIG. 5 shows schematic flowcharts of self-key generation in a key provisioning method according to an embodiment of the present disclosure.
FIG. 6a-FIG. 6c show schematic flowcharts of self-key generation in a key provisioning method according to an embodiment of the present disclosure.
FIG. 7a shows a schematic flowchart of generation of a functional secret key according to an embodiment of the present disclosure.
FIG. 7b shows examples of functional secret keys according to an embodiment of the present disclosure.
FIG. 8 shows an exemplary structure of the self-key generator at the ECU device.
FIG. 9a and FIG. 9b show schematic flowcharts of token-based authentication in a key provisioning method according to an embodiment of the present disclosure.
FIG. 10 shows an exemplary structure of an access token according to an embodiment of the present disclosure.
FIG. 11 shows authentication logic for an ECU device or a gateway.
FIG. 12 shows an exemplary process for verification of authentication and authorization according to an embodiment of the present disclosure.
FIG. 13 and FIG. 14 show exemplary use cases for dealership provisioning tools.
FIG. 15 shows a schematic structural diagram of a first device according to an embodiment of the present disclosure.
FIG. 16 shows a schematic structural diagram of a second device according to an embodiment of the present disclosure.
FIG. 17 shows a schematic structural diagram of a server according tc a non-claimed embodiment of the present disclosure.
FIG. 18 is a schematic block diagram of a first device according to an embodiment of the present disclosure.
FIG. 19 is a schematic block diagram of a second device according to an embodiment of the present disclosure.
FIG. 20 is a schematic block diagram of a server according to a non-claimed embodiment of the present disclosure.

### DESCRIPTION OF EMBODIMENTS

In the following description, reference is made to the accompanying figures, which form part of the disclosure, and which show, by way of illustration, specific aspects of embodiments of the present disclosure or specific aspects in which embodiments of the present disclosure may be used. It is understood that embodiments of the present disclosure may be used in other aspects and include structural or logical changes not depicted in the figures. The following detailed description, therefore, is not to be taken in a limiting sense, and the scope of the present disclosure is defined by the appended claims.

As described in the background part, the key provisioning for electronic control unit (ECU) devices in a vehicle is of much importance. Secret keys protect attackers from eavesdropping on the channel and manipulating arbitrary messages as well as providing fundamental system security. The security coverage of the secret keys includes (but is not limited to):
1) Communication security inside and outside of vehicles: message encryption and authentication using the secret key between ECU devices or to establish secure connection, for instance secure on-board communication (SecOC) and Transport Layer Security (TLS)/ Datagram Transport Layer Security (DTLS).
2) System and software integrity check: remote attestation using a secret key by verifying firmware or boot loader, or updating bundle decryption and integrity check for secure over-the-air update and secure reprogramming.

It should be noted that the above application scenarios are simply for the purpose of illustrating the embodiments of the pre sent disclosure, and should not be construed as limitations thereof.

There are various existing solutions aiming at key provisioning. Specifically, existing solutions focus on provisioning of a unique key to "single device". A key provisioning method uses a symmetrical key which is shared and used by both the sender and receiver of a message to encrypt and decrypt the message. The key generation server chooses a random device unique key for the hardware device and encrypts the device unique key with a shared key that is embedded in each hardware device such that only the hardware device can decrypt the device unique key. Because every device has the different key, the server should make the different encrypted message for lots of device.

Another solution depends on assumption of an on-chip key, which stores the provisioning key in secure location with encrypted form by the chip manufacturer. Therefore, it relies on the other keys stored in advance in the earlier manufacturing step. The provisioning key itself can be encrypted with the on-chip key and sent in encrypted form to the "device manufacturer" in an encrypted form. Therefore, this provisioning key is decided by the "processor manufacturer".

Existing solutions provides methods focusing on device manufacturers to set their own provisioning key, while our new idea provides a method focusing on "vehicle manufacturers" to set vehicle keys for a lot of devices on a vehicle based on self-key generation. Therefore, existing solutions can be adopted at an earlier stage before our solution is performed. We can take the existing methods for supplier manufacturing to store the provisioning key into each ECU device prior to vehicle manufacturing.

However, the existing solutions may have their own limitations. For example:
1) They are deployed for one device.
   Since the time is one of the most important things in the vehicle manufacturing system. If that is deployed for a vehicle with lots of devices, it will take lots of time to set for each device. If we want to refine or extend those existing solutions to be applied to vehicle side, a new protocol and system able to save time have to be designed.
2) They are based on key distribution as encrypted keys for each device from the server.
   It requires lots of messages with encrypted form for each device, hence, it will increase communication traffic in distributing the encrypted message for each device. As a result, it will make some delay additionally. Moreover, management servers and intermediate tools have to manage the complicated configuration data.
3) They require direct online connection to servers

The manufacturing system shall accurately carry out the production process according to the scheduled time and process. Usually factory doesn't have this kind of secure key storage, therefore, it needs to connect outside secure key server. Dependency on the real-time connection to obtain new key for each device may not be suitable in the production schedule, because it is difficult to expect that manufacturing systems will always reliably connect to online servers during production.

Aiming at such problems, the goal is to securely set an initial unique group key to devices in a vehicle (that is, all ECU devices in the vehicle) and, therefore, devices belonging to other vehicles cannot know those keys. This technique requires a lots of time to set keys for each device of each vehicle and complicated key management protocol with different device status such as their embedded default key and their desired keys. Furthermore, it takes laborious management system to collect and manage device information from lots suppliers. It should be noted that the devices in the vehicle may be devices other than the ECU devices, which is not limited in the present disclosure.

The present disclosure provides a key provisioning method and related products. Firstly, the present disclosure provides methods to securely provision keys to ECU devices of vehicles, and authentication method to verify provisioning tools, systems, and received messages, thereby achieving secure key setting (authenticated key provisioning). Secondly, the present disclosure uses self-generation of keys with only one message for all devices of a vehicle. It help to reduce traffic overhead and network transmission and operational delay, even if it is deployed for lots of devices and lots of vehicles, thereby realizing fast operation with minimal latency. Thirdly, the solution provided herein is scalable for deployment of many keys over vehicle standard protocol. In fact, the present disclosure does not require the online connection to server by applying "token-based authentication" for provisioning tools, which allow to access the ECU device without dependency on online connection. Moreover, it provides scalability with just only one message for each vehicle configuration over standard automotive protocol. This reflects actual vehicle production and dealership or mechanics environment, where easy management is required for various kinds of systems and stakeholders.

In the following, the embodiments of the present disclosure will be elaborated in details with reference to the accompanying figures.

Before elaborating the detailed implementations of the present disclosure, several keys that may be used herein are briefly explained in the first place.

The method described herein may be started under the assumption, in which every device securely holds a provisioning key (PVK) as a pre-shared secret key, the PVK is also referred to as a group key, those two terms are used in an exchangeable manner unless otherwise specified. Through the proposed method, each ECU device will get two kinds of secret keys: 1) a group key, also referred to as a vehicle-specific secret key (VSK) and 2) functional secret keys (FSK).

The PVK is pre-shared with all ECUs through the supplier production, for example, it may be injected by a provisioning tool at the supplier side. The PVK may be generally obtained from a vehicle manufacturer (OEM), the policy about PVK-distribution can be specifically decided and managed by the OEM. In a possible implementation, we assume that PVK is differentiated according to the vehicle type or model.

The VSK is self-generated by each ECU in a vehicle, for example, using PVK and some random string received from KMS (key management system). The VSK is different for each vehicle (unique to VIN).

The FSK is self-generated by each ECU of some particular group, for example, using VSK and pre-defined specific string and values. That groups can be distinguished as its application or purpose such as secure on-board communication (SecOC) and transport layer security (TLS).

An OEM's public key (for a key management system (KMS)) is used to verify received provisioning data.

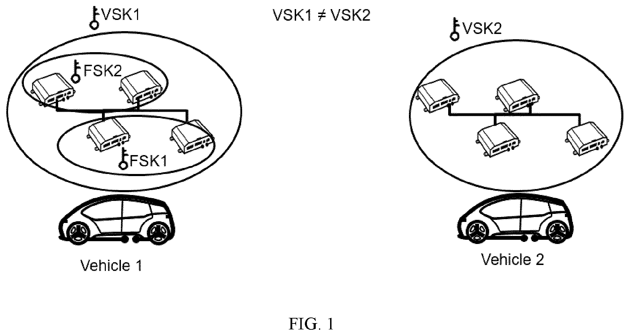

As shown in FIG. 1, for the devices in a vehicle 1, all the devices share a VSK1, the devices are divided into two groups and each group possesses a FSK, i.e., FSK1 and FSK2; for the devices in a vehicle 2, all the devices share a VSK2, and no FSK is provisioned for these devices. Since the VSKs differ among vehicles, therefore, VSK1 is not equal to VSK2.

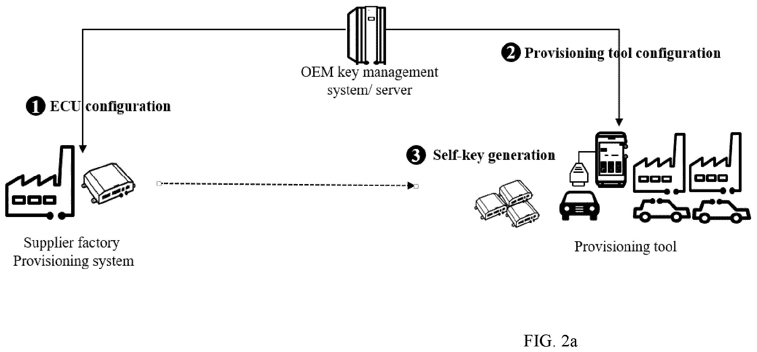

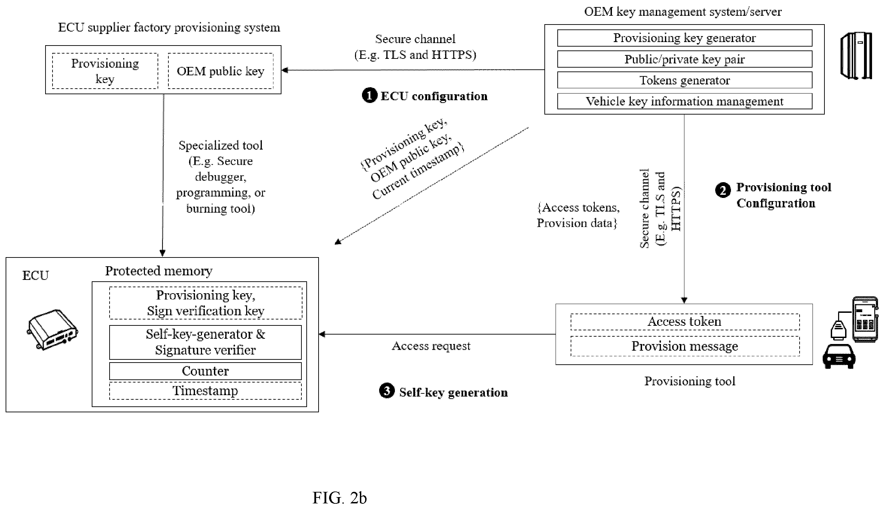

FIG. 2a shows a key provisioning system according to an embodiment of the present disclosure and FIG. 2b shows a general provisioning process with respect to the key provisioning system shown in FIG. 2a according to an embodiment of the present disclosure.

As shown in FIG. 2a, the key provisioning system may consist of three main parties, including an OEM KMS, a supplier factory provisioning system and a provisioning tool at the vehicle side. Firstly, the KMS has a role to generate provisioning messages. The provisioning tool is in charge of transmitting this message to the devices. Because the provisioning tool does not have any information about the keys, there is no way for the tool to securely access to the device. The "access token" allows the provisioning tool to gain the access to the device of the vehicle. It is also provided by the KMS, and can be used only once and only for the key setting. Every device is able to check current provisioning state with a "counter" value, increased whenever key provisioning state is changed. Counter and access token are described in the later parts.

The KMS is responsible for configuring the ECU devices, as well as configuring the provisioning tool. At the supplier side, the ECU devices are configured in the supplier factory provisioning system during the ECU-production time (the supplier production stage). The provisioning tool is a typical device or program for device diagnostic, which may be a hardware device or a software program such as OEM-side specialized vehicle-testing device, dealership diagnostic tools/ scanner, or application running on portable devices (mobile phone and pad). The provisioning tool generally doesn't know anything of those aforementioned keys. The term is introduced herein just for the ease of description, and there is no specific limitation on the provisioning tool.

FIG. 2b shows system components and relations. In the figure, secure channels between suppliers and the KMS server and between the provisioning tool and the KMS server are assumed to be established, for example, using existing technologies. The establishment of these secure channels is not the focus of the present disclosure. We assume that there must be at least a secure channel such as TLS and supplier management system (the ECU supplier factory provisioning system). Therefore, they can share some information in the first and second steps. We will describe the security consideration about this in the later section. Besides, the dotted boxes in FIG. 2b refer to the information obtained from other parties, and the solid boxes therein refer to the local information already pre-stored.

There are four kinds of major components. Whole security depends on the KMS that manages provisioning data, verification keys and access tokens. The supplier systems (the ECU supplier factory provisioning system shown in FIG. 2a and FIG. 2b) also have a secure tool to inject specific information (such as about keys, timestamp, vehicle, and device) to their products. The ECU device product should have some protected memory to securely keep the provisioning key and self-generation functions. For instance, the device should have secure storage based on hierarchical storage management (HSM) or trusted execution environment (TEE). The tester tool (also referred to as a provisioning tool/system, those two terms are used in an exchangeable manner unless otherwise specified) has only access token and provision messages received from the KMS. Its major role is to deliver the provisioning messages to the ECUs.

The provisioning process is divided into three steps: 1) ECU configuration, 2) provisioning tool configuration, and 3) self-key generation. The first step is implemented between the KMS and the supplier factory provisioning system, which is for device configuration in the supplier production, where some engineer or system will inject the secret information inside the ECU. In the second step which is implemented between the KMS and the provisioning tool, the KMS will offer the provisioning tool with provisioning data for the vehicle key setting. A major role of the provisioning tool is just sending this data to the ECU devices. As the last step which is implemented between the supplier factory provisioning system and the provisioning tool, self-key generation is performed at each device using the received provisioning data, to obtain the VSK and FSKs.

The whole provisioning process for ECU devices for a vehicle may be as follows:
1) The supplier production tool imports to its product local provisioning data, for example, the local provisioning data may include a provision key, an OEM's public key, a timestamp, other Information for Car. It should be noted that the above data listed herein is just for illustrative purpose, the detailed implementation will be described in the following embodiment.
2) The provisioning tool gains access to all ECUs of the vehicle with an access token received from KMS and sends a provisioning message to them.
3) Every ECU in the vehicle self-generates the vehicle-specific secret key using the provisioning message transmitted by the provisioning tool and authenticated with signature and public key.
4) Every ECU in the vehicle self-generates the other functional secret keys based on the self-generated and verified vehicle-specific secret key.
5) The gateway of the vehicle makes sure that every ECU completes key provisioning process, and informs the result to the server through the provisioning tool.
6) Except the gateway (GW), all of ECUs remove the provisioning key and self-key-generation function.

The key provisioning method provided by the present disclosure will be described in combination with the detailed information shown in FIG. 2b.

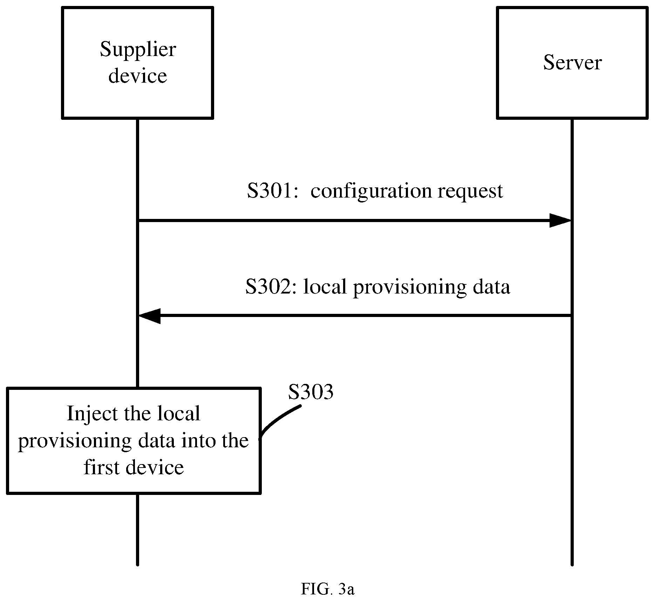

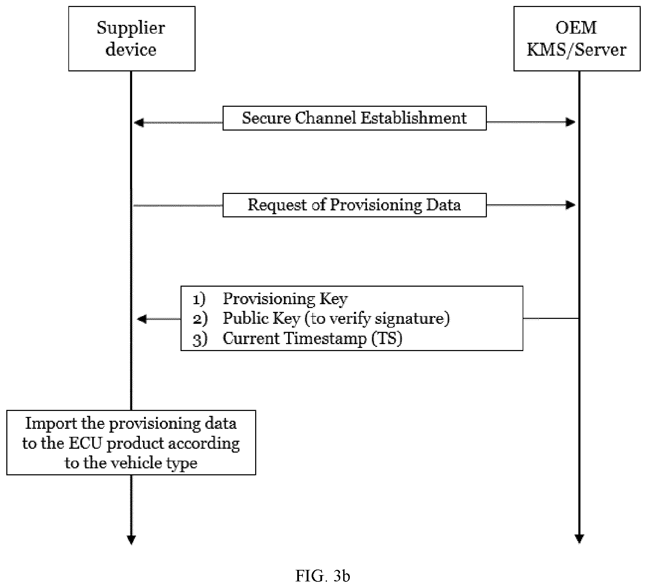

FIG. 3a and FIG. 3b show schematic flowcharts of first device configuration in a key provisioning method according to an embodiment of the present disclosure. FIG. 3a and FIG. 3b show the specific processing in the aforementioned first step, ECU configuration in the supplier production. The method may be executed by a server at the OEM side and a supplier device (also referred to as a fourth device in the later description, those two terms are used in an exchangeable manner unless otherwise specified) at the supplier side. The flowchart relates to the first step shown in FIG. 2a and FIG. 2b, and serves to configure the ECU device, and the first device may be the ECU device shown in FIG. 2b.

The process is assumed to be performed in the supplier manufacturing system. Additionally it is assumed, as mentioned earlier, that the server (the OEM KMS) and the supplier device (provided with the supplier manufacturing system) do mutual authentication to verify each other and establish a secure channel for secure communication.

The method may include:
S301: the supplier device sends a configuration request to the server for configuring the first device and the server receives the configuration request from the supplier device.

Over the established secure channel, the supplier device sends a configuration request to the KMS server, the configuration request may include an identity of a vehicle to which the first device belongs, that is, the vehicle onto which the first device (the ECU device shown in FIG. 2a) is mounted.

Exemplarily, the supplier device may also include supplementary information in the configuration request, i.e., information about the product such as a vehicle type, a product type and a supplier identification, so as to obtain the local provisioning data for the ECU device.

In actual applications, the KMS server can define its own policy for distributing the provisioning data, the policy may vary depending on OEM's choices.

S302: the server sends to the supplier device local provisioning data and the supplier device receives the local provisioning data.

Exemplarily, with reference to FIG. 2b, upon obtaining the identity of the vehicle, the KMS server may respond appropriate provisioning data matched with the ECU device, i.e., the local provisioning data to the supplier device, where the local provisioning data may include 1) a provisioning key (the provisioning key shown in FIG. 2b), 2) a public key (the OEM public key shown in FIG. 2b, also referred to as the sign verification key at the ECU), and 3) a local timestamp, where the provisioning key is configured to generate a group key for the ECU device at a later stage; the public key is configured to verify an authority of a second device provided with a provisioning tool which sends a provisioning message to the ECU device, it is actually used for verification to make sure that the received message is originally generated by the KMS; and the local timestamp is configured to verify a validity of the generated provisioning key, it is actually used for freshness not to allow obsolete or replayed messages, as a possible implementation, the local timestamp may be a current time.

S303: the supplier device injects the local provisioning data into the first device.

The injection may be done with the supplier's own secure method like secure debugging tool. The first device stores the data in the protected memory like secure storage provided by HSM or TEE.

Correspondingly, at the first device side, the first device may acquire the local provisioning data.

Exemplarily, as shown in FIG. 2b, the supplier device and the server may communicate over a secure channel established based on a certain protocol, such as the TLS or the Hyper Text Transfer Protocol Secure (HTTPS), and the supplier device implemented with the ECU supplier factory provisioning system may receive the provisioning key and the OEM public key, and then inject the provisioning key, the public key and the current timestamp into the ECU, thereby completing the configuration of the ECU device.

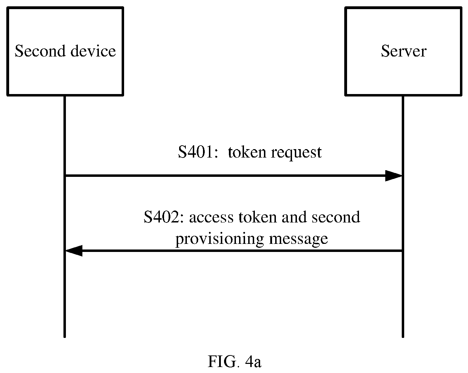

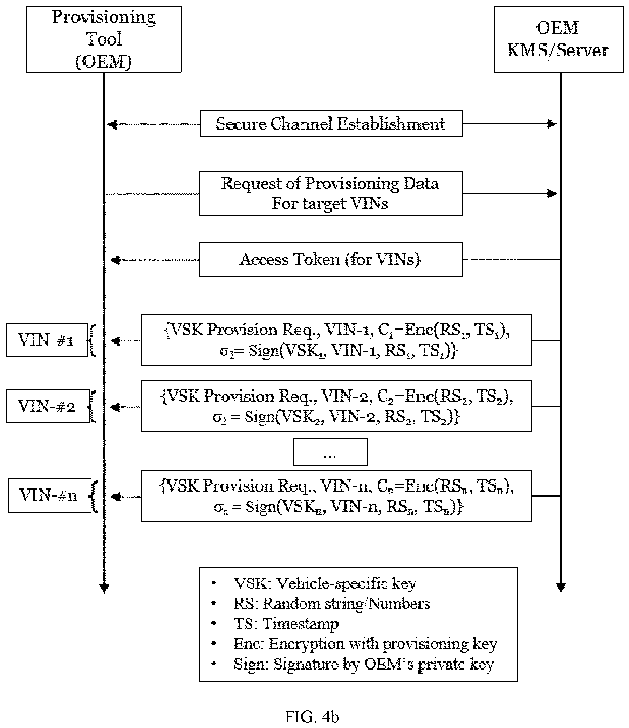

FIG. 4a and FIG. 4b show schematic flowcharts of second device configuration in a key provisioning method according to an embodiment of the present disclosure. FIG. 4a and FIG. 4b show the specific processing in the aforementioned second step, the provisioning tool configuration, so as to prepare the provisioning tool provided in the second device for accessing the ECU device. FIG. 4b specify the detailed parameters in comparison with FIG. 4a. As stated above, the main role of the provisioning tool is to access the ECU device and pass the provisioning data received from the KMS server to the ECU device. The flow shown in FIG. 4 is conducted at the OEM side, and in particular, between a server at the OEM side and a second device which may be provided with the provisioning tool at the OEM side. The flowchart relates to the second step shown in FIG. 2a and FIG. 2b, and the first device in the following description may be the ECU device shown in FIG. 2b. Besides, the provisioning tool may be provided in the second device as a software function or a hardware, or, the provisioning tool may be implemented as the second device, the configuration of the provisioning tool is thus equivalent to the configuration of the second device, the operations done by the second device throughout the description can also be regarded as the operations done by the provisioning tool.

S401: the second device sends a token request for requesting an access token corresponding to a group key to the server and the server receives the token request.

S402: the server sends to the second device an access token corresponding to the token request and a second provisioning message corresponding to the access token.

Before accessing the first device, the second device will first obtain the access token corresponding to the group key (the VSK), the access token will be used by the second device to access the first device so that the first device can generate the group key.

The token request may include one or more identities of vehicles which the second device plans to provision and a vehicle to which the first device belongs is included in the vehicles. In a possible implementation, the token request may simply include one identity of the vehicle to which the first device belongs. In another implementation, the token request may include several identities of vehicles which the second device plans to provision, and the vehicle to which the first device belongs is included in said vehicles. The several identities of vehicles may be optionally in the form of a list.

When the token request simply includes one identity of the vehicle to which the first device belongs, the server returns the access token corresponding to the identity of the vehicle to which the first device belongs and a second provisioning message containing provisioning data of the vehicle. Besides, it is also possible that the second device aims to provision several vehicles, in this way, the second device may include in the token request a list of identities of vehicles, and the server may in turn send, to the second device, an access token corresponding to the token request, and second provisioning messages containing provisioning data for the vehicles. By using this access token, the second vehicle may be able to access the vehicles in the list.

Exemplarily, as shown in FIG. 2b, even if both of the provisioning tool and the KMS server belong to the OEM, they can be separated geographically, which means that the provisioning tool (possibly a portable device or a program) is separated away from the KMS server with a physical distance, such as a "factory-side system/tool" and a "cloud-based KMS server". Hence, the KMS server and the second device need a secure channel to share some information. As shown in FIG. 2b, the secure channel may be established using the TLS and the HTTPS. The proposed method also considers aftermarket dealership tester tools not under OEM control (that use case will be described in the later part).

The provisioning tool sends the token request for provisioning data and access token to the KMS server via the established secure and authenticated channel, along with provisioned vehicle identification to let the server know and decide which data is to transfer. The provisioning tool already is aware of which vehicles to be provisioned such as from the manufacturing management system, production schedule, or directly access to the vehicle. It transfers the list of vehicles and ECU devices they want to access for provisioning. After making sure that the requestor (the second device) has authorization on the target vehicle identities (VIN) the server generates and sends a right provision message to the second device. The server transmission contains two kinds of data.
1) Access token: this is used for accessing the ECU devices (the first device). The tool will have only one access token that specifies which vehicles it can access. In a possible implementation, the access token may also specify which devices it can access. Access tokens with different structures may achieve different functions, which will be described in later part.
2) Provisioning data: that is what the second device (or the provisioning tool) should forward to the first device for provisioning and simply one message is assigned per vehicle. It may consist of following data: a random string encrypted by the provisioning key (which refers to the provisioning key, PVK in the ECU), a provisioning timestamp (which refers to the current timestamp from the OEM server to the ECU device) encrypted by the provisioning key and a verification signature, where the random string and the provisioning timestamp may be used for generating the provisioning key by the ECU device, and the verification signature may be used to verify the validity of the provisioning key generated by the ECU device.

In a possible implementation, the random string RS*ᵢ* and the provisioning timestamp TS*ᵢ* may be included in a cipher-text *C*_{*i*.}

As described above, when the token request includes multiple identities of vehicles, the server may respond with several second provisioning messages containing provisioning data for different vehicles, therefore, the provisioning data returned in step S402 may be expressed with an index i, where i means the identifier of the target vehicle i (the target vehicle identity). For example, the provisioning data returned by the server may include: a random string RS*ᵢ* encrypted by the provisioning key, a provisioning timestamp TS*ᵢ* encrypted by the provisioning key and a verification signature *σᵢ*. The server could also include a VIN-i (an identity of the target vehicle) in the provisioning data so as to let the second device know which provisioning data corresponds to which vehicle, in this case, the verification signature *σᵢ* means the signature for the data of VSK*ᵢ*, RS*ᵢ* and TS*ᵢ*, where VSI*ᵢ* is the desired key the ECU device would obtain through self-key generation for the dedicated vehicle i. Alternatively, the server and the second device could also negotiate, before the configuration of the provisioning tool, a correspondence between the token request and the second provisioning message, for example, when the token request includes several identities, the server may return back the second provisioning messages in a predefined order so that the second device would know which second provisioning message corresponds to which vehicle without including the VIN-i in the provisioning data contained in the second provisioning message. In this case, the verification signature *σi* means the signature for the data of VSK*ᵢ*, VIN-*i*, RS*ᵢ* and TS*ᵢ*.

With the above method, the provisioning tool in the second device may be configured, and be prepared to perform provisioning on target vehicles.

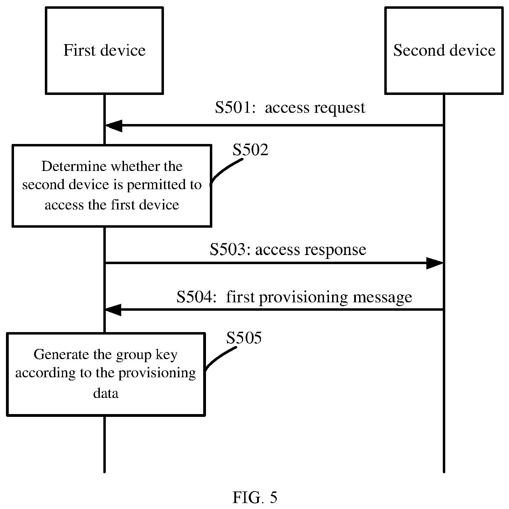

FIG. 5 is a schematic flowchart of self-key generation in a key provisioning method according to an embodiment of the present disclosure. FIG. 5 shows the specific processing in the aforementioned third step, the key generation based on the provisioning data. The flow shown in FIG. 5 is conducted between a first device (an ECU device) and a second device (provided with a provisioning tool), and in particular, the ECU device mounted in a vehicle and the second device which may be provided with the provisioning tool at the OEM side. The flowchart relates to the third step shown in FIG. 2a and FIG. 2b, and the first device in the following description may be the ECU device shown in FIG. 2b. It should be noted that, before the processing shown in FIG. 5, the first device has been configured with the method shown in FIG. 3a and the second device has also been configured with the method shown in FIG. 4a.

S501: the second device sends to the first device an access request for requesting to access the first device, and the first device receives the access request from the second device.

In a possible implementation, the access request may be just a request for writing data into the first device. The access request is used for triggering the authentication of the second device by the first device.

S502: the first device determines whether the second device is permitted to access the first device.

Upon receiving the access request, the first device may determine whether the second device is permitted to access the first device for the sake of security. In other words, the determination of the access authority is triggered by the access request.

S503: the first device sends an access response to the second device based on the determination, and the second device receives the access response from the first device.

In a possible implementation, when the first device finds that the second device is permitted to access the first device, it may respond with a positive response, otherwise, it may respond with a negative response. The access response is hence returned by the first device based on the access request.

S504: the second device sends a first provisioning message to the first device and the first device receives the first provisioning message from the second device.

Upon receiving the access response from the first device, the second device may send the first provisioning message to the first device.

As described earlier, the access response returned by the first device may be a positive response or a negative response, in a possible implementation, when the response is positive, the second device may send the first provisioning message directly to the first device; when the response is negative, the second device may interact with the server (e.g., the KMS server shown in FIG. 2b) to update its authority in accessing the first device. For example, the second device may update its token, with an updated token the second device may access the first device.

S505: the first device generates the group key according to the provisioning data.

The first provisioning message includes provisioning data for generating a group key, once the first device receives the first provisioning message from the second device, it may generate the group key (e.g., the VSK shown in FIG. 2a) according to the provisioning data contained in the first provisioning message.

It should be noted that here we only show the operation of one first device, in actual applications, all the ECU devices in the vehicle may perform the same operations to generate the group key.

Besides, as will be elaborated in detail in following part, in actual applications, the ECU device may be connected to a gateway in the vehicle, in that case, since the data or information transmitting to the first device from outside sources may first meet the gateway, therefore, with the first vehicle being the ECU device, the receiving of the access request in step S501, as well as the receiving of the first provisioning message in step S504, should be interpreted as indirect receiving, that is, receiving those kinds of data by virtue of forwarding from the gateway.

According the present disclosure, the second device is enabled to access the first devices in a vehicle and configure the group key for all the first devices in the vehicle with one provisioning message, thereby reducing traffic overhead and network transmission and operational delay, even if it is deployed for lots of devices and lots of vehicles.

In the following, the detailed implementation of the self-key generation of the ECU device may be elaborated with reference to the accompanying figures.

In actual applications, the ECU device may be connected with a gateway (GW). The gateway represents a device connected with on-board ECU devices as well as having an interface to communicate with external devices such as diagnostic. Therefore, the second device may encounter the gateway first when accessing the ECU device.

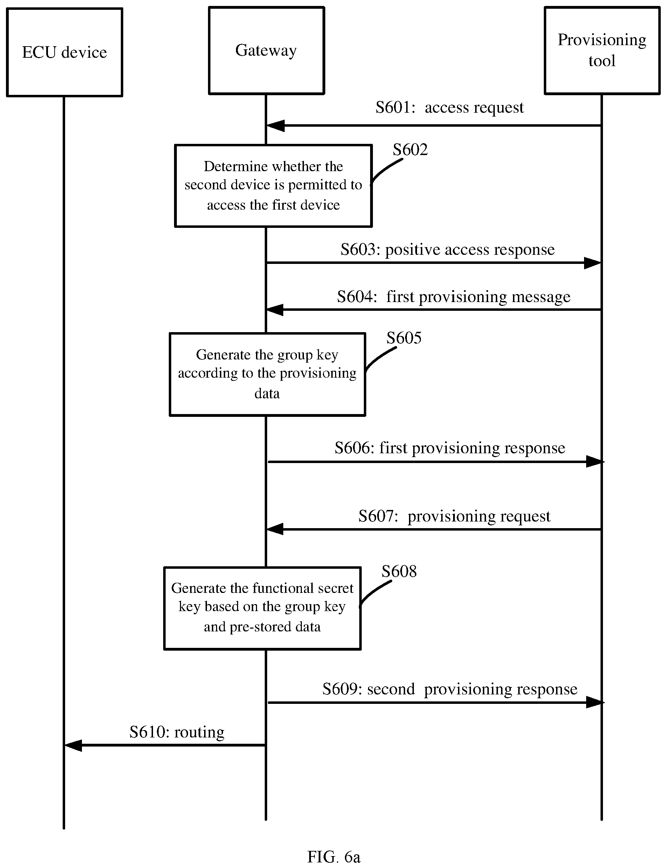

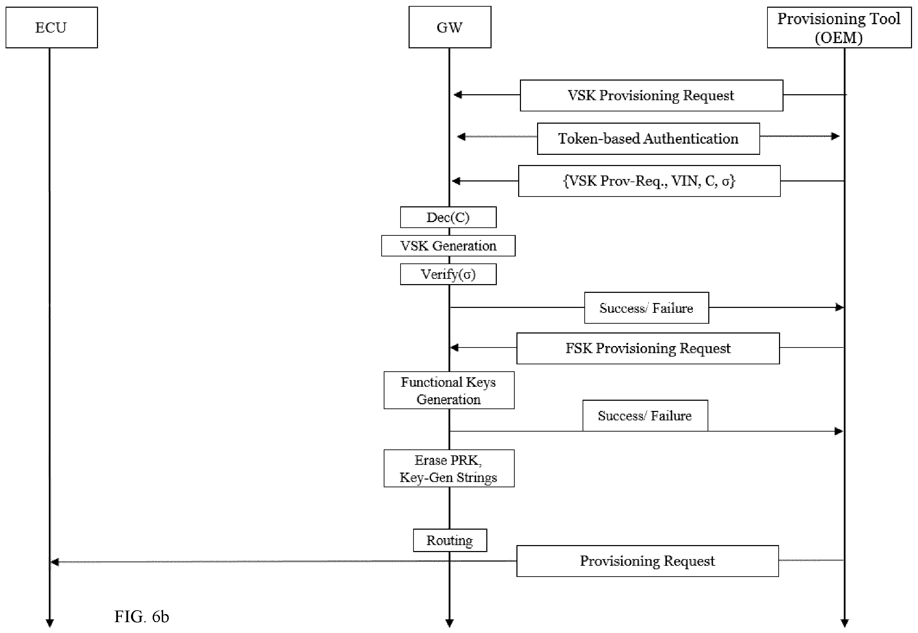

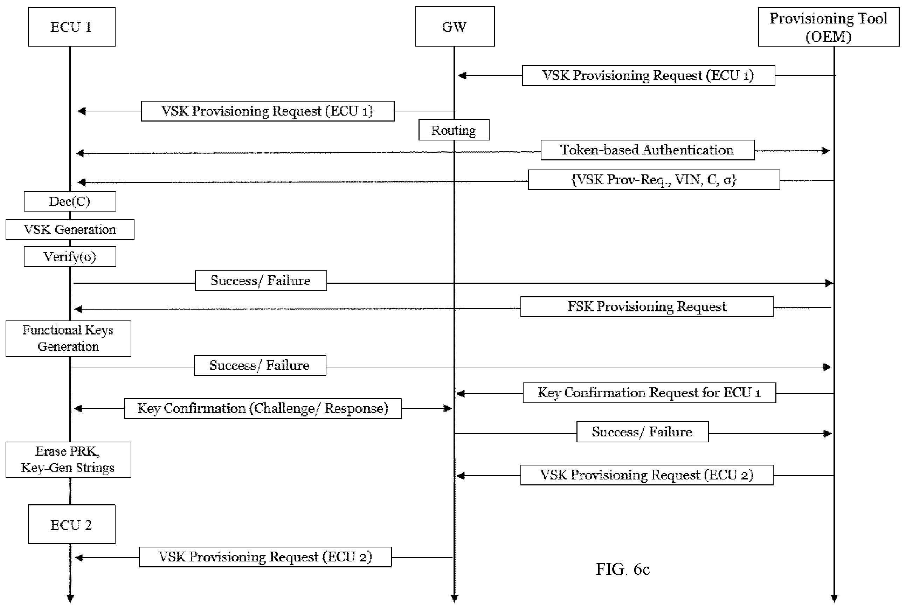

The third step shown in FIG. 2a and FIG. 2b can thus be implemented into two ways depending on where the ECU device does. FIG. 6a and FIG. 6b show how the third step is done in the GW and FIG. 6c shows a flow for normal ECU devices. When the provisioning tool tries to access the vehicle, it will meet the GW first and needs to go through GW to get accessed to the ECU devices in the vehicle. Therefore, the GW should be the first provisioning target in the vehicle production.

FIG. 6a-FIG. 6c show schematic flowcharts of a key provisioning method according to an embodiment of the present disclosure. Comparing with FIG. 5a and FIG. 5b, more specified details are added in FIG. 6a-FIG. 6c. It should be noted that, before the processing shown in FIG. 6a-FIG. 6c, the ECU device has been configured with the method shown in FIG. 3a and the second device has also been configured with the method shown in FIG. 4a.

The method may include:
S601: the provisioning tool sends to the gateway an access request for requesting to access the gateway, and the gateway receives the access request from the provisioning tool.

Upon triggering of the access request, the access request may be just a request for writing data into the first device.

S602: the gateway determines whether the provisioning tool is permitted to access the gateway.

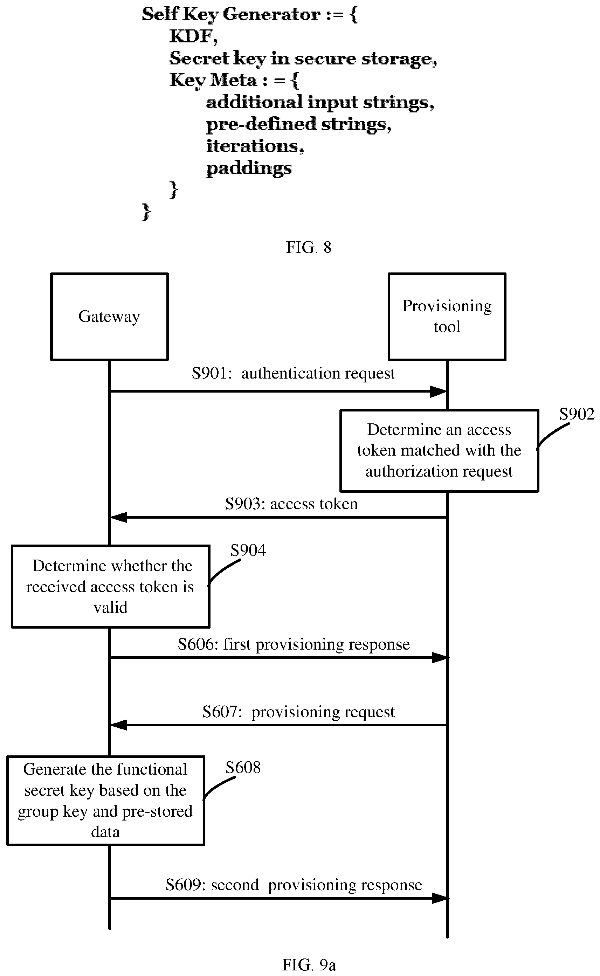

Upon receiving the access request, the gateway may determine whether the provisioning tool is permitted to access the first device for the sake of security. The determination may be token-based authentication between the gateway and the provisioning tool. The specific authorization will be described later with reference to FIG. 8a and FIG. 8b.

S603: the gateway sends an access response to the provisioning tool based on the determination, and the provisioning tool receives the access response from the gateway.

The access response may be a positive access response or a negative access response.

Upon determining that the received access token is valid, the gateway sends a positive access response to the provisioning tool; and upon determining that the received access token is invalid, the gateway sends a negative access response to the provisioning tool, this may be possible when the access token sent by the provisioning tool expires.

At the provisioning tool side, the receiving of a negative access response may indicate that the provisioning tool has a right access token to provision the gateway, but the receiving of a negative access response may indicate that the provisioning tool does not have a right access token to provision the gateway, therefore, upon receiving a negative access response from the gateway, the provisioning tool may send to the server a token update request for updating an access token for the gateway, and receive from the server an updated access token as the access token corresponding to the group key. In either case, the provisioning tool is finally enabled to access the gateway.

At the server side, upon receiving from the second device the token update request for updating an access token for the gateway, and the server sends to the provisioning tool an updated access token according to the token update request.

S604: the provisioning tool sends a first provisioning message to the gateway and the gateway receives the first provisioning message from the provisioning tool.

Upon receiving the access response from the first device, the provisioning tool may send the first provisioning message to the first device.

The first provisioning message may include provisioning data for generating a group key by the gateway.

S605: the gateway generates the group key according to the provisioning data.

The provisioning data may include a random string encrypted by the provisioning key, a provisioning timestamp encrypted by the provisioning key and a verification signature.

The group key may be generated as follows: the gateway first decrypts the provisioning data by using the provisioning key to obtain the random string and the provisioning timestamp, and then generates the group key according to the random string and the provisioning timestamp; after generating the group key, the gateway verifies the validity of the generated provisioning key according to the verification signature in the provisioning data.

As described earlier, except the group key (the VSK), the ECU device may also possess FSKs as an option. The following steps are optional and may be performed according to actual needs.

S606: the gateway sends a first provisioning response to the provisioning tool, and the provisioning tool receives the first provisioning response.

After generating the group key, the gateway may send a response to the provisioning tool, so that the provisioning tool would know whether the group key is generated successfully or not.

S607: when the first provisioning response indicates that the group key is successfully generated by the first device, the provisioning tool sends a provisioning request for provisioning a functional secret key for the gateway, and the gateway receives from the second device the provisioning request.

S608: the gateway generates the functional secret key based on the group key and pre-stored data.

The generation of the FSK may be done based on the generated group key and some pre-store data.

The gateway (if the FKS is generated by the gateway) or the ECU device (if the FKS is generated by the ECU device itself) can use the VSK and pre-defined strings to obtain the ECU-dedicated functional keys and some group-dedicated functional keys. *{ECU Part number, Unique ID, Serial number, and additional string* (like "e2e")} can be an example of pre-defined string for an ECU-dedicated key (as an end-to-end secret key between the KMS server and the ECU device).

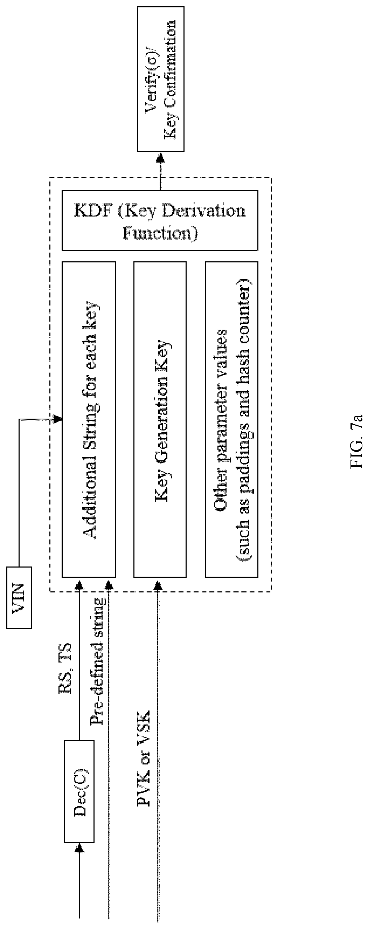

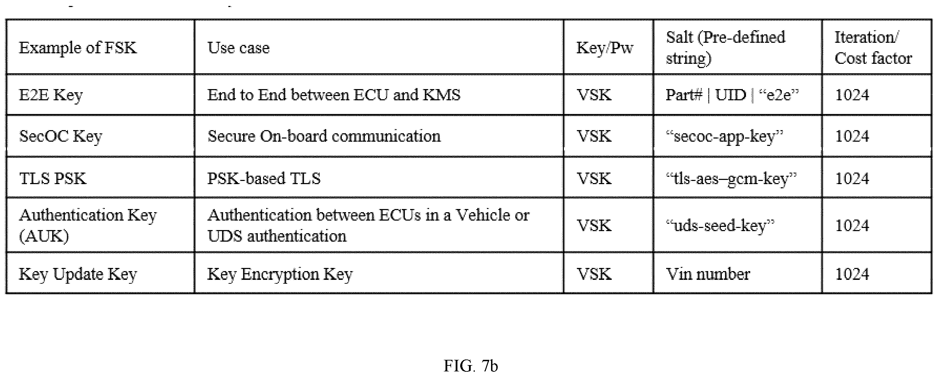

A possible implementation of the FSK generation is shown in FIG. 7a. Examples of the FSKs are shown in FIG. 7b. As shown in FIG. 7a, where the pre-defined string may be some data pre-written in the ECU device, and the generation of the FSK may also be based on the identity of the vehicle (VIN). The output of the key derivation function (KDF) may be verified with the signature in the ECU device.

Example of VSK may be: KDF (PVK, VIN ∥ Pre-defined string ∥ RS ∥ TS), with a pseudo random function (PRF) such as HMAC-SHA256. Besides, an example of a function key may be: KDF (VSK, VIN ∥ pre-defined string).

Besides, parameter shown in FIG. 7b such as Pw(password, passphrase), salt, and iteration/ cost factor can be applied in examples of KDF such as PBKDF2 (RFC 8018, PKCS #5: Password-Based Cryptography Specification Version 2.1) and scrypt (RFC 7914, The scrypt Password-Based Key Derivation Function).

S609: the gateway sends a second provisioning response to the second device and the provisioning tool receives a second provisioning response from the first device.

The second provisioning response serves to let the provisioning tool know whether the FSK is generated successfully or not by the gateway.

S610: the gateway routes the generated keys to the ECU device.

After the generation of the VSK and the FSK, the gateway may route the generated keys to the ECU device.

In a possible implementation, after the generation of the VSK and the FSK, the gateway may then erase the secret information related to the key provisioning, such as the public key and the string for generating the keys.

In order to better understand the above process, please refer to FIG. 6b. It starts with the VSK provisioning request (the access request in step S601) from the provisioning tool to the device; for instance, this provisioning request could be a kind of "write data" request over a diagnostic message (UDS, Unified Diagnostic Service). Subsequently, after token-based authentication is done, the provisioning tool sends the provisioning data received from the KMS (similar to step S604). Once GW receives this data, it will 1) decrypt the cipher-text to get the random string and timestamp from the message, 2) generate the VSK with the decrypted data, and 3) verify if the generated data is correct. If those processes are done successfully, the provisioning tool sends a FSK provisioning request and asks the ECU device to generate other functional secret keys. When the device finishes all of key generations, it will remove the provisioning data and secret information related to this self-generation. The GW has responsibility to route those received data to the corresponding ECU devices in the vehicle.

FIG. 6c show another possible case where the provisioning is done at the ECU device, in this case, the gateway generally routes everything received from the provisioning tool to the ECU device. The token-based authentication and the generation of the group key as well as the FSK is as same as those shown in FIG. 6a and FIG. 6b, which is not described in detail for brevity.

In addition, regarding the generation of the VSK, with reference to FIG. 2b, the key generation is performed in each ECU using "Self-Key-Generator" (which may be implemented as a software function at the ECU device) that consists of KDF (key derivation function), secret keys, and pre-defined strings and parameters. There are many KDFs such as HKDF, PBKDF2 and Scrypt. We can choose anyone of them. Apart from this, KDF takes additional input strings received from external source to generate unique results for the vehicle. Some of example strings are shown in FIG. 8.

Moreover, the process of a typical ECU device is similar to the way it is done in the GW, except for one more step of "key confirmation", in which the GW makes sure that the ECU devices generate FSKs correctly as a kind of typical challenge-response authentication. For instance, the ECU device may receive a key confirmation challenge from the gateway, where the key confirmation challenge is sent by the gateway upon receiving from the provisioning tool a key confirmation request for confirming whether the functional secret key is generated correctly; then the ECU device generates a key confirmation response according to the key confirmation challenge, the functional secret key and a second pre-defined algorithm; and sends the key confirmation response to the gateway.

In combination with FIG. 6c, the aforementioned key confirmation process may be a challenge-response as follows:
1) the GW sends to the corresponding ECU a "random number" as the challenge,
2) The ECU makes the response using a generated key (the generated FSK) and cryptographic function such like a form of MAC_{VSK}(FSK | random), and replies it to the GW, where the MAC refers to a message authentication code algorithm, which may be changed to other suitable algorithms according to actual needs, which is not limited herein;
3) The GW compares it with its own generation and determines failure or success.

In a possible implementation, the GW does not have to fully verify the access token every time the provisioning tool tries to access the vehicle. It can keeps and uses recent authentication logs with similar method to cookie or cache, to reduce the delay. For instance, the GW can simply check the authorization value in the access token without wasting time on verifying signatures (by comparing it with the previously verified signature). The details on the authentication process may be explained in the later part.

As shown in FIG. 6c, ECU 1 and ECU 2 are first provisioned in series, in another possible case, the provisioning tool can access multiple devices at the same time if the network and the GW can afford doing it. One of the most time consuming processes is signature verification. Transmission, decryption and key generation are somewhat faster. During the verification processing of a device, the provisioning tool can access other devices to reduce overall time. Accessing to other devices on different isolated networks helps to optimize the whole process by reducing the chances of interrupting.

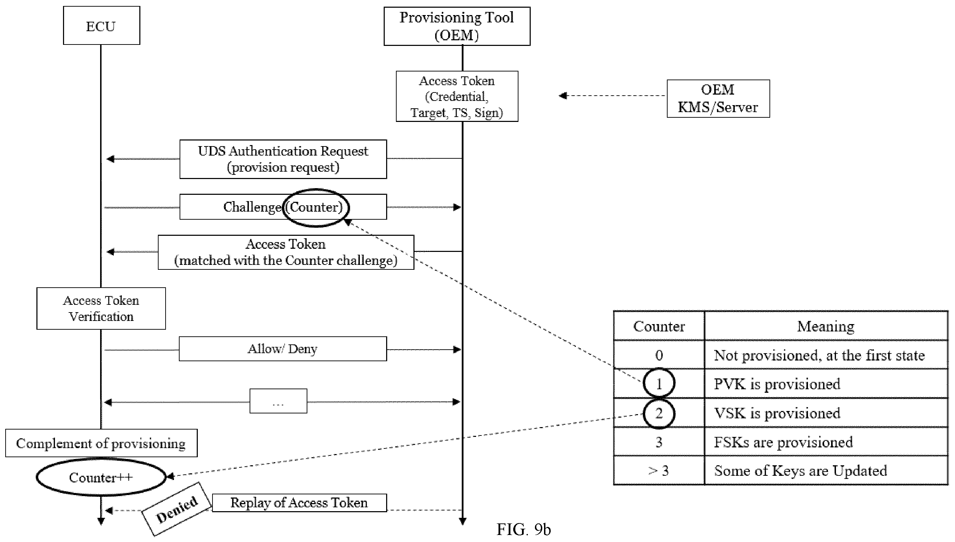

FIG. 9a and FIG. 9b show schematic flowcharts of token-based authentication in a key provisioning method according to an embodiment of the present disclosure. These figures actually specified the aforementioned step S602. It should be noted that, as described earlier, the provisioning may be done directly at the ECU device (FIG. 6c), or may be done at the gateway (FIG. 6b), therefore, depending on specific situations, the token-based authentication may be performed between the ECU device and the second device equipped with the provisioning tool, or between the gateway and the second device. In the following, the description is made by taking an example where the authorization is done between the gateway and the provisioning tool. For the case where the authorization is between the ECU device and the second device equipped with the provisioning tool, for the operations of the ECU device, reference may be made to the operations of the gateway.

FIG. 9a shows an exemplary flowchart of the token-based authentication. The overall authentication process is based on automotive standard protocol of UDS (unified diagnostic services) authentication, known as UDS security access, seed-key authentication or challenge-response authentication. Unlike the conventional way of using random challenge, the ECU device uses fixed challenge number with "Counter" as shown in FIG. 9b. This counter represents some specific status of the provisioning, e.g., counter number '1' means that the device has the PVK at the moment and can proceed further step to generate a VSK. Every time the device complete provisioning, it will increase the counter number by one. Note that this counter can never be decremented and cannot be returned to a lower number. When receiving the counter as the challenge from an ECU device or a gateway, the provisioning tool should respond the access token matched with this counter challenge number. Since the counter increments after the provisioning is done successfully, the provisioning tool cannot reuse the token again. So if someone attempts relay attacks with a previously used token, it must be rejected as it does not match the counter number that has already increased.

The process will be further described in combination with FIG. 9b.

S901: the gateway sends to the provisioning tool an authentication request for verifying an authority of the provisioning tool, and the provisioning tool receives the authentication request from the gateway.

The token-based authentication may be a challenge-response authentication. Unlike the conventional way of using a random challenge, the ECU device uses fixed challenge number with "Counter" as shown in FIG. 9a.

In a possible implementation, the authentication request may include a local counter (the counter as shown in FIG. 2b), the local counter may be configured to reflect a provisioning state of the gateway and a value of the counter is changed based on a preset rule by the gateway once the provisioning state of the gateway changes.

Here we may define specific meaning to the values of the local counter so as to block malignant accesses. For example, as shown in the table in FIG. 9a, the local counter being 0 may represent a non-provisioned state, the local counter being 1 may represent a state where the PVK has been provisioned, the local counter being 2 may represent a state where the VSK has been provisioned, the local counter being 3 may represent a state where the FSK has been provisioned, and the local counter being greater than 3 may represent a state where some of keys are updated. In the following, descriptions will be made based on such assumptions, however, it should be appreciated that the specific values of the local counter are just for illustrative purpose and should not be construed as a limitation to the present disclosure. Other values are possible as long as they indicate different provisioning states of the ECU device.

S902: the provisioning tool determines an access token matched with the authentication request.

The provisioning tool determines a provisioning state of the gateway according to the authentication request, and upon determining that the group key (VSK) of the gateway is not generated by the gateway, the provisioning tool uses the access token corresponding to the group key as the access token matched with the authentication request. Here the access token may be received by the provisioning tool from the server according to the flow shown in FIG. 4a. If the provisioning tool has no right access token, it may request the server to update its access token. The updating process will be described in detail later.

S903: the provisioning tool sends the access token matched with the authentication request to the gateway, and the gateway receives the access token matched with the authentication request.

S904: the gateway determines whether the received access token is valid.

The determination of the validity of the access token may be done based on the specific structure of the access token.

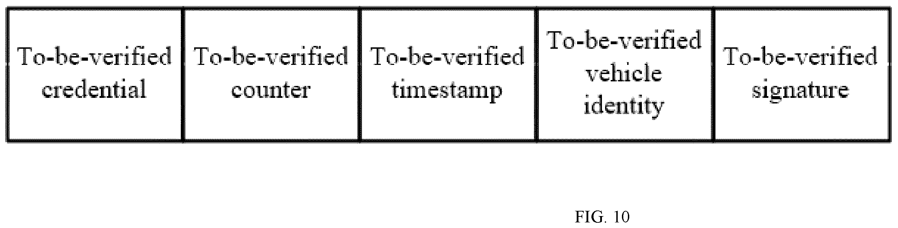

An exemplary structure of an access token is shown in FIG. 10. As shown in FIG. 10, the access token may include a to-be-verified credential generated based on a first pre-defined algorithm, a to-be-verified counter, a to-be-verified timestamp, a to-be-verified vehicle identity and a to-be-verified signature.

According to the structure, upon receiving the access token, the gateway may determine whether the received access token is valid or not, specifically, the gateway may compare each field in the access token with its local data shown in in the ECU device of FIG. 2b, the gateway may determine that the received access token is invalid if a condition is satisfied, the condition may include any one or more of the following:
1) A local credential generated based on a local counter (the counter shown in the ECU device of FIG. 2b) and the first pre-defined algorithm being inconsistent with the to-be-verified credential.

The credential in the received access token is generated by the server according to a predefined algorithm, and the gateway may generate a credential according to the same algorithm so as to complete the verification.

In a possible implementation, the credential may be generated on both sides (the gateway and the server) as: Credential = MAC_{Key}(Additional String | Counter | Pad), where Credential is a tag generated using a MAC (message authentication code) algorithm based on the counter and a pre-shared secret key; the pre-shared secret key may be a PVK or one of functional keys for example, an authentication key (AUK), the key is equal to PVK if Counter = 1 or 2, and AUK if Counter > 2; the additional string in the above algorithm is optional, for example may be an OEM ID, a vehicle type, or some pre-defined random string; the padding depends on the algorithm for generating the credential such as fitting 32-byte and 64-byte long with length or zeros.

2) The local counter (the counter shown in the ECU device of FIG. 2b) being inconsistent with the to-be-verified counter.

The gateway may compare the local counter with the to-be-verified counter in the received access token, and determine that the access token is invalid if those two values are inconsistent.

Besides, as described earlier with reference to FIG. 9a, the Counter must be equal to 1 for normal case (for provisioning tool), that is, a state in which the PVK is configured and ready for generation of the VSK.

3) The local timestamp being later than the to-be-verified timestamp.

The gateway may compare the local timestamp (the timestamp shown in the ECU device of FIG. 2b) with the to-be-verified timestamp in the received access token, and determine that the access token is invalid if those two values are inconsistent.

In fact, the to-be-verified timestamp represents the value when the access token is generated, the local timestamp represents the value injected in manufacturing (factory), i.e., the ECU-production time, therefore, the local timestamp can be used to protect a "replay attack" case in which the provisioning tool tries to reuse old (expired/ obsolete) token, since the token-generation time should be more recent than the ECU-production time.

4) An identity of a vehicle to which the first device belongs being inconsistent with the to-be-verified vehicle identity.

As described earlier, during the configuration stage of the provisioning tool, the server may return to the provisioning tool an access token for accessing certain vehicles, therefore, the access token may include the identity of the vehicle to which the first device belongs, or, there may be at least one to-be-verified vehicle identity in the access token, this may be the case when the token request sent (step S402 in FIG. 4a) by the provisioning tool to the server includes a list of identities of vehicles, the access token may consequently include multiple identities of vehicles to which the provisioning tool is authorized to access.

In other words, the timestamp depends on the token-generated time by the KMS server and is used for checking expiry of the received access token (freshness of the token).

5) A failure of checking the to-be-verified signature with the public key.

The to-be-verified signature is generated on the preceding data listed above {credential, counter, accessible targets, timestamp} with KMS's private key (paired with the public key that the target device holds) and some signature algorithm such as RSASSA-PSS, ECDSA, and EdDSA.

In a possible implementation, the access token may include fields used for further identifying accessible vehicles and ECUs, such as a vehicle group/type, a device type and a list of device identities.

Upon determining that the received access token is valid, the gateway sends a positive access response to the provisioning tool; and upon determining that the received access token is invalid, the gateway sends a negative access response to the provisioning tool.

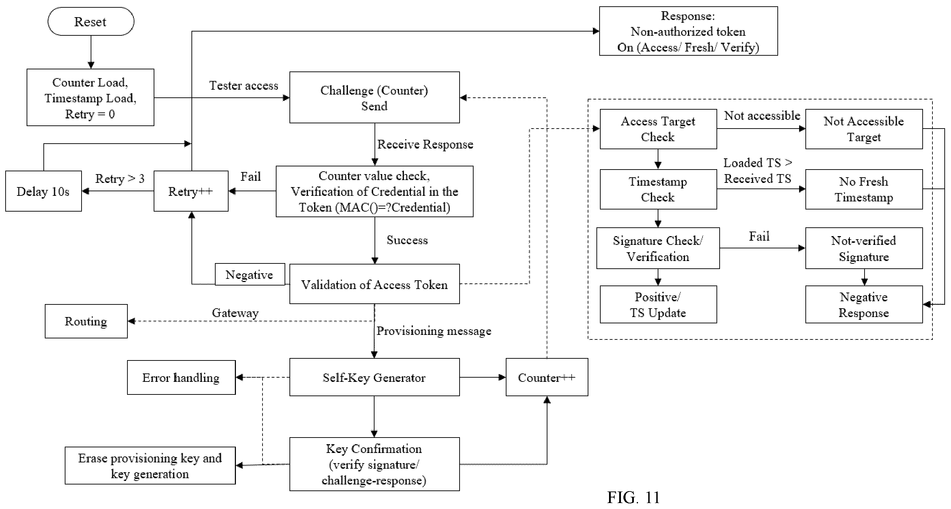

FIG. 11 shows authentication logic for an ECU device. The authentication logic at the gateway is similar to that at the ECU device and will be omitted for the sake of brevity. When the device receives an access token, it first verifies that the credentials and counters are valid, and then sequentially verifies that the accessible target, time stamp, and signature are valid. Each time the verification fails, the number of attempts increases, and if the number exceeds three tries (which may be defined according to actual needs), the access may be restricted for a certain time (10s). Even though we specify those thresholds about the number of tries and delay timer, they could be adjustable depending on car manufacturer policy. If the whole key provisioning process is successfully completed, the device erases KDFs and key metadata.

The above process shows the token-based authentication for generating of the group key, i.e., the VSK.

As described in step 902, normally, since the ECU device has not been provisioned yet, the local counter at the ECU device equals to 1, which means that the PVK, i.e., the provisioning key shown in FIG. 2b has already been configured for the ECU device, in other words, configuration of the ECU device has been done, for example, based on the flow shown in FIG. 3a, at this point, the ECU device is ready for generation of the group key (VSK). Therefore, the provisioning tool can determine that the gateway is ready for provisioning, and thus determine the access token received from the KMS server for generating the VSK as the access token matched with the authentication request.

In another case, when the challenge equals to 2, the provisioning tool would determine, based on the authentication request, that the gateway has been provisioned with a VSK, in this case, if the gateway still wants to perform provisioning on the gateway, it would have to access the gateway with an access token corresponding to the FSK, combining with the structure of the access token shown in FIG. 10, the to-be-verified counter in the access token should be equal to 2 so as to ensure the validity check at the gateway or the ECU device during the token-based authentication.

In still another case, when the challenge equals to 3, the provisioning tool would determine, based on the authentication request, that the gateway has been provisioned with a VSK, in this case, if the gateway still wants to perform provisioning on the gateway, it would have to access the gateway with an access token corresponding to the key updating, combining with the structure of the access token shown in FIG. 10, the to-be-verified counter should be equal to 3 so as to ensure the validity check at the gateway or the ECU device during the token-based authentication.

In FIG. 9b, we simply describe the case where the gateway has not been provisioned with a VSK, so the provisioning tool would respond the challenge with an access token corresponding to the group key. In a possible implementation, even when the provisioning tool accesses the gateway or the ECU device with the access token matched with the authentication request, it would still be possibly denied by the gateway or the ECU device, this actually considers security of provisioning tools, for instance, some attack can reuse previously used token, expired token, or unauthorized token.

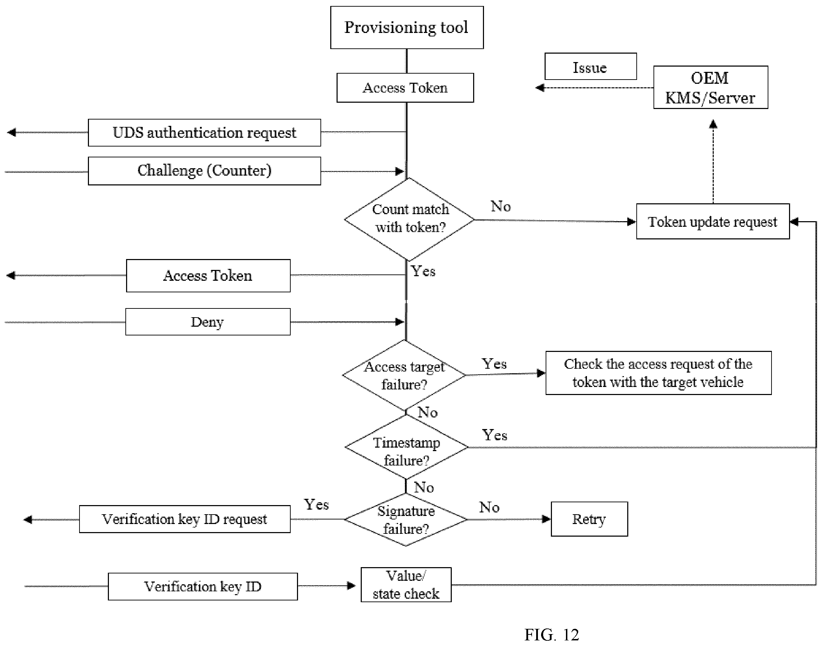

Anyhow, if the provisioning tool does not have a right access token which matches with the authentication request, it may need to update its access token. A possible process for verification of authentication and authorization by the provisioning tool is shown in FIG. 12, in which the provisioning tool may verify the access token when receiving a negative response from the gateway and update the access token.

Specifically, as shown in FIG. 12, when the provisioning tool receives the access token, it may send a UDS authentication request to the gateway, and receives a challenge which includes a counter, then the provisioning tool may determine an access token matched with the counter:
if there is no access token matched with the counter, then the provisioning tool may send a token update request to the KMS server for requesting an updated access token, the KMS server may determine whether the provisioning tool is authorized to provision the gateway according to its own policy, if yes, the KMS server may send to the provisioning tool an updated token; and
if there is an access token matched with the counter, the provisioning tool may send the determined access token to the gateway, and if the access token fails in the validity check at the gateway, i.e., the access token is denied by the gateway, upon receiving a negative response from the gateway, the provisioning tool may check whether one of the following fails: the access target check, the timestamp check, or the signature check. The failure of the access target check may lead to a check of the access request of the access token with the target vehicle; the failure of the timestamp check may lead to the sending of the token update request as described earlier; and the failure of the signature may lead to the sending of a verification key ID request, and the gateway may send a verification key ID to the provisioning tool for check, which will be consequently used in the token update request to the KMS server.

There could be concerns about potential leakage of the provisioning key from suppliers. For an attacker to obtain a VSK, he/she should collect at least three kinds of information managed in different part and stage:
1) Provisioning key: distributed to supplier manufacturing/provisioning tool at the supplier production.
2) Pre-defined string (this may be for example, the salt shown in FIG. 7b, which is used for key derivation of other subsequent secret keys): distributed to the supplier security manager before the supplier production.
3) Encrypted RS and TS: distributed to OEM manufacturing/provisioning tool at the vehicle production.

Therefore, if a VSK is exposed to an attacker, it means that information has been leaked from all of the supplier manufacturing system, the supplier security manager, and the OEM manufacturing system. Or, the protected memory of the ECU device (e.g. HSM) is compromised.

The security of the present disclosure is guaranteed for the following reasons: under the assumption of security management for each component and secure channels between the systems and provisioning tools, dealership provisioning tools can only access certain devices on specific vehicle shipped or sold under the permission of OEMs (not used for the vehicle manufacturing stage). The use cases for such aftermarket provisioning tools will be described in the next part.

The technical solution of the present disclosure may provide several technical advantages.

First of all, it would facilitate the management and is easy to extend. For example, the provisioning tools do not need to obtain access authorization for each ECU, they just obtain one access token from the sever which specifies the accessible targets; besides, the provisioning tool and the KMS server manage simply one message (i.e., the first provisioning message from the provisioning tool to the ECU device and the second provisioning message from the KMS server to the provisioning tool, both of the provisioning messages contain provisioning data) for all ECUs on a vehicle. Moreover, the technical solution may be deployable over the standard automotive protocol (such as the UDS).

Secondly, based on the proposed solution, it becomes efficient for mass production with low traffic and fast operation. The supplier just needs to keep a secret for an ECU type (no need to manage every ECU differently), the OEM manufacturer keeps simply one provisioning message for a vehicle type. Reduced data size with limited information is achieved due to self-generation of keys at the ECU device or the gateway, and it is also possible to set the keys for multiple devices at the same time.

Thirdly, the proposed solution also concerns about security issues. In fact, any secret does not be shared with other external system and tools, therefore, the proposed solution provides not only end-to-end security between vehicle devices and the KMS server, but key independence for each vehicle and key authentication from signature of KMS. Moreover, it is robust against cryptography analysis attacks because of very limited usage and exposure of PVK.

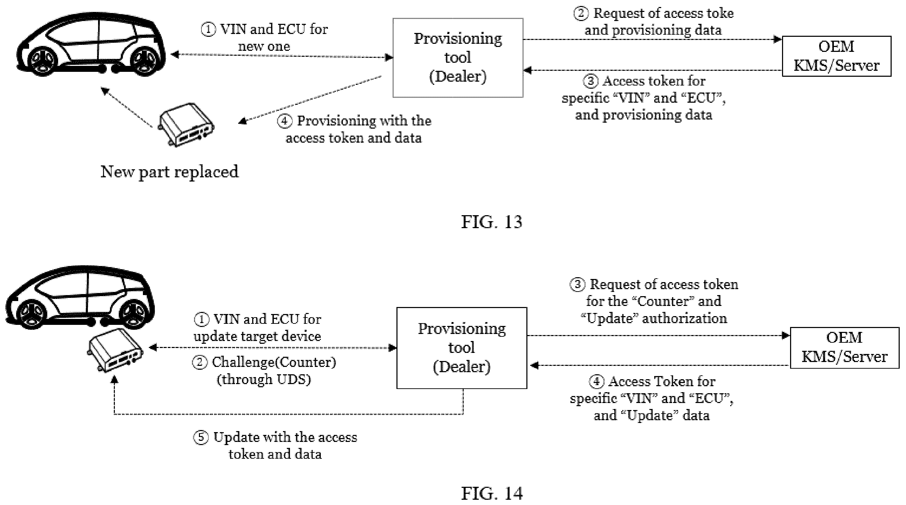

Apart from the aforementioned solutions, the present disclosure also provides solutions for dealership provisioning tools. As shown in FIG. 13 and FIG. 14, they show some use cases for dealership provisioning tools (aftermarket tools, the provisioning tool here may also be implemented as software or hardware). The first case shown in FIG. 13 is for part replacement (such as ECU replacement), and the second case shown in FIG. 14 is for update of a FCK. Most of the processes are the same as described above.

In FIG. 13, in order for those testers to access the new replacement device, they have to obtain an access token for the desired device from the OEM. The provisioning tool sends a request to the server for an access token and provisioning data according to the VIN (identity of the vehicle) and an ECU identity of a new ECU replacement (a replacement device of the first device), upon receiving the access token specified for accessing the target vehicle (identified with the VIN) and the target ECU device (identified with the ECU identity) and the provisioning data, the provisioning tool may then provision the ECU replacement with the received access token and provisioning data, the specific operations may be as same as the provisioning of the first device shown in FIG. 5. The replacing of the ECU device may be applied in a scenario where an ECU device is damaged or old, and the tester may use the proposed method to provision a new ECU device and replace the damaged or old ECU device with the new one.

Similarly, if the testers want to update some particular keys, it should obtain a special access token for update authorization with OEM's permission, because the device will present a higher counter number (for example, greater than 2). Specifically, the second device may send to the server a request for requesting a functional secret access token for updating a functional secret key of the first device, upon receiving the request, the server may return the functional secret access token and corresponding update data to the second device, when receiving the functional secret access token and corresponding update data from the server, the second device may provision the first device in a way similar to the provisioning of the functional secret key in FIG. 9. For example, as shown in FIG. 14, which depicts the process of updating a key of an ECU device in a vehicle, for a particular key update, the provisioning tool may perform challenge-response authorization with the ECU device, and then request from the server the access token corresponding to the counter number in the challenge, then with the access token and the update data returned by the server, the provisioning tool is enabled to update the key in the ECU device. For the details of the token updating, reference may be made to FIG. 12 and related descriptions.

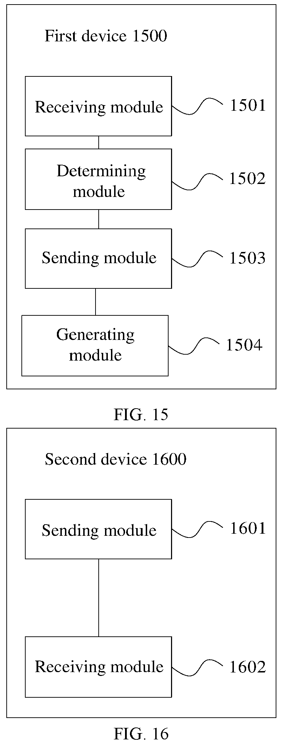

FIG. 15 shows a schematic structural diagram of a first device according to an embodiment of the present disclosure. The first device may be mounted in a vehicle. The first device 1500 includes: a receiving module 1501, a determining module 1502, a sending module 1503 and a generating module 1504.

The receiving module 1501 is configured to receive from a second device an access request for requesting to access the first device; the determining module 1502 is configured to determine, based on the access request, whether the second device is permitted to access the first device; the sending module 1503 is configured to send an access response to the second device based on the determination; the receiving module 1501 is further configured to receive a first provisioning message from the second device, where the first provisioning message includes provisioning data for generating a group key, and the group key is shared among first devices in the vehicle; and the generating module 1504 is configured to generate the group key according to the provisioning data.

In a possible implementation, the determining module 1502 is specifically configured to: upon triggering of the access request, send to the second device an authentication request for verifying an authority of the second device; receive from the second device an access token matched with the authentication request; determine whether the received access token is valid;
the sending module 1503 is configured to: upon determining that the received access token is valid, send a positive access response to the second device; and upon determining that the received access token is invalid, send a negative access response to the second device.

In a possible implementation, the first device further includes an acquiring module, configured to acquire local provisioning data from a server, where the local provisioning data includes a provisioning key, a public key and a local timestamp, the provisioning key is configured to generate the group key, the public key is configured to verify an authority of the second device, and the local timestamp is configured to verify a validity of the generated provisioning key.

In a possible implementation, the provisioning data includes a random string encrypted by the provisioning key, a provisioning timestamp encrypted by the provisioning key and a verification signature;
the generating module 1504 is configured to: decrypt the provisioning data by using the provisioning key to obtain the random string and the provisioning timestamp; generate the group key according to the random string and the provisioning timestamp; and verify the validity of the generated provisioning key according to the verification signature.

In a possible implementation, the access token includes a to-be-verified credential generated based on a first pre-defined algorithm, a to-be-verified counter, a to-be-verified timestamp, at least one to-be-verified vehicle identity and a to-be-verified signature;
the determining module 1502 is specifically configured to:
determine that the received access token is invalid if a condition is satisfied, where the condition includes any one or more of the following: a local credential generated based on a local counter and the first pre-defined algorithm being inconsistent with the to-be-verified credential, the local counter being inconsistent with the to-be-verified counter, the local timestamp being later than the to-be-verified timestamp, an identity of a vehicle to which the first device belongs being inconsistent with the at least one to-be-verified vehicle identity, a failure of checking the to-be-verified signature with the public key.

In a possible implementation, the access token includes any one or more of the following: a vehicle type, a device type and a list of device identities.

In a possible implementation, the authentication request includes the local counter, the local counter is configured to reflect a provisioning state of the first device and a value of the counter is changed based on a preset rule by the first device once the provisioning state of the first device changes.

In a possible implementation, the sending module 1503 is further configured to: send a first provisioning response to the second device.

In a possible implementation, the receiving module 1501 is further configured to receive from the second device a provisioning request for provisioning a functional secret key for the first device; the generating module 1504 is further configured to generate the functional secret key based on the group key and pre-stored data; and the sending module 1503 is further configured to send a second provisioning response to the second device.

In a possible implementation, the receiving module 1501 is further configured to receive a key confirmation challenge from a third device, where the key confirmation challenge is sent by the third device upon receiving from the second device a key confirmation request for confirming whether the functional secret key is generated correctly; the generating module 1504 is further configured to generate a key confirmation response according to the key confirmation challenge, the functional secret key and a second pre-defined algorithm; and the sending module 1503 is further configured to send the key confirmation response to the third device.

According to the solution provided by the present disclosure, all ECU devices in a vehicle can be provisioned with a group key by virtue of one provisioning message containing provisioning data. In this way, the efficiency for key provisioning is improved, and the provisioning cost is reduced. By using the generated group key, security of the data communication associated with the ECU device is ensured. Moreover, reduced data size with limited information is achieved due to self-generation of keys at the ECU device, and it is also possible to set the keys for multiple devices at the same time.

The first device may be applied to implement technical solutions in any one of the method embodiments described above. The implementation principles and technical effects thereof are similar, and are not described herein.

FIG. 16 shows a schematic structural diagram of a second device according to an embodiment of the present disclosure. The second device 1600 includes a sending module 1601 and a receiving module 1602.

The sending module 1601 is configured to send to a first device an access request for requesting to access the first device, where the first device is mounted in a vehicle; the receiving module 1602 is configured to receive an access response from the first device, wherein the access response is returned by the first device based on the access request; and the sending module 1601 is further configured to send a first provisioning message to the first device, where the first provisioning message includes provisioning data for generating a group key by the first device, and the group key is shared among first devices in the vehicle.

In a possible implementation, the sending module 1601 is further configured to a server a token request for requesting an access token corresponding to the group key, where the token request includes one or more identities of vehicles which the second device plans to provision and a vehicle to which the first device belongs is included in the vehicles; and the receiving module 1602 is further configured to receive from the server the access token corresponding to the group key and a second provisioning message corresponding to the access token.

In a possible implementation, the receiving module 1602 is further configured to receive from the first device an authentication request for verifying an authority of the second device;
the second device further includes a determining module, the determining module is further configured to determine an access token matched with the authentication request; and the sending module 1601 is further configured to send the access token matched with the authentication request to the first device.

In a possible implementation, the determining module is further configured to determine a provisioning state of the first device according to the authentication request; and upon determining that the group key of the first device is not generated by the first device, use the access token corresponding to the group key as the access token matched with the authentication request.

In a possible implementation, the receiving module 1602 is further configured to receive a negative access response from the first device, wherein the access response is returned by the first device based on the access request; and the sending module 1601 is further configured to send to the server a token update request for updating an access token for the first device, and receiving from the server an updated access token as the access token corresponding to the group key.

In a possible implementation, the receiving module 1602 is further configured to receive a first provisioning response from the first device;
the sending module 1601 is further configured to: when the first provisioning response indicates that the group key is successfully generated by the first device, send a provisioning request for provisioning a functional secret key for the first device; and
the receiving module 1602 is further configured to receive a second provisioning response from the first device.

In a possible implementation, the sending module 1601 is further configured to send to the server a request for requesting an access token for a replacement device of the first device; the receiving module 1602 is further configured to receive from the server an access token corresponding to the group key; and use the received access token to provision the replacement device.

According the present disclosure, the second device is enabled to access the first devices in a vehicle and configure the group key for all the first devices in the vehicle with one provisioning message, thereby reducing traffic overhead and network transmission and operational delay, even if it is deployed for lots of devices and lots of vehicles.

The second device may be applied to implement technical solutions in any one of the method embodiments described above. The implementation principles and technical effects thereof are similar, and are not described herein.

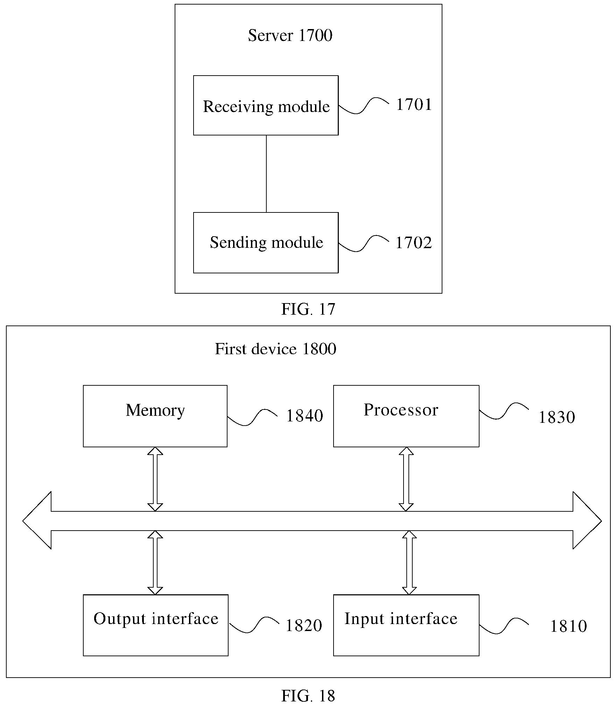

FIG. 17 shows a schematic structural diagram of a server according to an embodiment of the present disclosure. The server 1700 includes a receiving module 1701 and a sending module 1702.

The receiving module 1701 is configured to receive from a fourth device a configuration request for configuring a first device, where the configuration request includes an identity of a vehicle to which the first device belongs and the first device is mounted in the vehicle; and the sending module 1702 is configured to send to the fourth device local provisioning data, where the local provisioning data is configured for generation of a group key for the first device, and the group key is shared among first devices in the vehicle.

In a possible implementation, the receiving module 1701 is further configured to receive a token request from a second device, where the token request includes one or more identities of vehicles which the second device plans to provision and a vehicle to which the first device belongs is included in the vehicles; and the sending module 1702 is further configured to send to the second device an access token corresponding to the token request and a second provisioning message corresponding to the access token.

In a possible implementation, the receiving module 1701 is further configured to receive from the second device a token update request for updating an access token for the first device, and sending to the second device an updated access token according to the token update request.

The server may be applied to implement technical solutions in any one of the method embodiments described above. The implementation principles and technical effects thereof are similar, and are not described herein.

FIG. 18 is a schematic block diagram of a first device according to an embodiment of the present disclosure.

As shown in FIG. 18, an embodiment of the present disclosure further provides a first device 1800. The device 1800 may be the device 1500 in FIG. 15, which can be configured to implement content pertaining to the first device corresponding to the method in the method embodiments. The device 1800 includes an input interface 1810, an output interface 1820, a processor 1830, and a memory 1840. The input interface 1810, the output interface 1820, the processor 1830, and the memory 1840 can be connected by a bus system. The memory 1840 is configured to store programs, instructions or codes. The processor 1830 is configured to execute the programs, the instructions or the codes in the memory 1840 to control the input interface 1810 to receive a signal and control the output interface 1820 to transmit a signal and complete the operations in the foregoing method embodiments.

In a specific implementation, the sending module 1503 in the device 1500 shown in FIG. 15 may be implemented with the output interface 1820 in FIG. 18, also, the receiving module 1501 may be implemented with the input interface 1810 in FIG. 18, and the determining module 1502 and the generating module 1504 in the device 1500 shown in FIG. 15 may be implemented with the processor 1830 in FIG. 18.

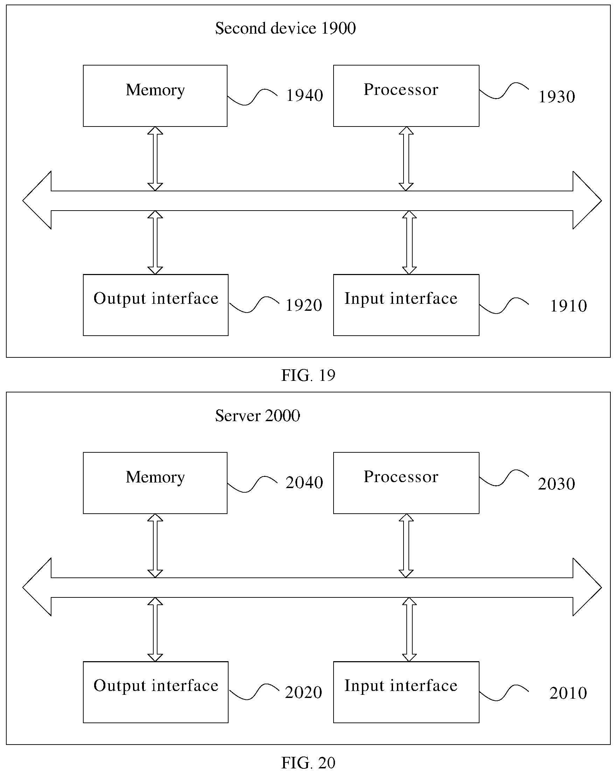

FIG. 19 is a schematic block diagram of a second device according to an embodiment of the present disclosure.

As shown in FIG. 19, an embodiment of the present disclosure further provides a first user device 1900. The device 1900 may be the device 1600 in FIG. 16, which can be configured to implement content pertaining to the first device corresponding to the method in the method embodiments. The device 1900 includes an input interface 1910, an output interface 1920, a processor 1930, and a memory 1940. The input interface 1910, the output interface 1920, the processor 1930, and the memory 1940 can be connected by a bus system. The memory 1940 is configured to store programs, instructions or codes. The processor 1930 is configured to execute the programs, the instructions or the codes in the memory 1940 to control the input interface 1910 to receive a signal and control the output interface 1920 to transmit a signal and complete the operations in the foregoing method embodiments.

In a specific implementation, the sending module 1601 in the device 1600 shown in FIG. 16 may be implemented with the output interface 1920 in FIG. 19, also, the receiving module 1602 may be implemented with the input interface 1910 in FIG. 19.

FIG. 20 is a schematic block diagram of a server according to an embodiment of the present disclosure.

As shown in FIG. 20, an embodiment of the present disclosure further provides a first user device 2000. The device 2000 may be the device 1700 in FIG. 17, which can be configured to implement content pertaining to the first device corresponding to the method in the method embodiments. The device 2000 includes an input interface 2010, an output interface 2020, a processor 2030, and a memory 2040. The input interface 810, the output interface 2020, the processor 2030, and the memory 2040 can be connected by a bus system. The memory 2040 is configured to store programs, instructions or codes. The processor 2030 is configured to execute the programs, the instructions or the codes in the memory 2040 to control the input interface 2010 to receive a signal and control the output interface 2020 to transmit a signal and complete the operations in the foregoing method embodiments.

In a specific implementation, the sending module 1702 in the device 1700 shown in FIG. 17 may be implemented with the output interface 2020 in FIG. 20, also, the receiving module 1701 may be implemented with the input interface 2010 in FIG. 20.

The present disclosure also provides a computer storage medium storing computer executable instructions which, when being executed, implement the method according to the embodiments of the present disclosure.

The present disclosure also provides a computer program product is provided, including an instruction which, when executed on a computer, causes a computer to perform the method in the above-mentioned embodiments.

For instance, it is understood that a disclosure in connection with a described method may also hold true for a corresponding device or system configured to perform the method and vice versa. For example, if one or a plurality of specific method steps are described, a corresponding device may include one or a plurality of units, e.g. functional units, to perform the described one or plurality of method steps (e.g. one unit performing the one or plurality of steps, or a plurality of units each performing one or more of the plurality of steps), even if such one or more units are not explicitly described or illustrated in the figures. On the other hand, for example, if a specific apparatus is described based on one or a plurality of units, e.g. functional units, a corresponding method may include one step to perform the functionality of the one or plurality of units (e.g. one step performing the functionality of the one or plurality of units, or a plurality of steps each performing the functionality of one or more of the plurality of units), even if such one or plurality of steps are not explicitly described or illustrated in the figures. Further, it is understood that the features of the various exemplary embodiments and/or aspects described herein may be combined with each other, unless specifically noted otherwise.

Terms such as "first", "second" and the like in the specification and claims of the present disclosure as well as in the above drawings are intended to distinguish different objects, but not intended to define a particular order.

The term such as "and/or" in the embodiments of the present disclosure is merely used to describe an association between associated objects, which indicates that there may be three relationships, for example, A and/or B may indicate presence of A only, of both A and B, and of B only.

In the embodiments of the present disclosure, expressions such as "exemplary" or "for example" are used to indicate illustration of an example or an instance. In the embodiments of the present disclosure, any embodiment or design scheme described as "exemplary" or "for example" should not be interpreted as preferred or advantageous over other embodiments or design schemes. In particular, the use of "exemplary" or "for example" is aimed at presenting related concepts in a specific manner.

In one or more examples, the functions described may be implemented in hardware, software, firmware, or any combination thereof. If implemented in software, the functions may be stored on or transmitted over as one or more instructions or code on a computer-readable medium and executed by a hardware-based processing unit. Computer-readable media may include computer-readable storage media, which corresponds to a tangible medium such as data storage media, or communication media including any medium that facilitates transfer of a computer program from one place to another, e.g., according to a communication protocol. In this manner, computer-readable media generally may correspond to (1) tangible computer-readable storage media which is non-transitory or (2) a communication medium such as a signal or carrier wave. Data storage media may be any available media that can be accessed by one or more computers or one or more processors to retrieve instructions, code and/or data structures for implementation of the techniques described in this disclosure. A computer program product may include a computer-readable medium.

By way of example, and not limitation, such computer-readable storage media can include RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technolo gies such as infrared, radio, and microwave, then the coaxial cable, fiber optic cable, twisted pair, DSL, or wireless technologie s such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

Instructions may be executed by one or more processors, such as one or more digital signal processors (DSPs), general purpose microprocessors, application specific integrated circuits (ASICs), field programmable logic arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, the functionality described herein may be provided within dedicated hardware and/or software modules configured for encoding and decoding, or incorporated in a combined codec. Also, the techniques could be fully implemented in one or more circuits or logic elements.

The techniques of this disclosure may be implemented in a wide variety of devices or apparatuses, including a wireless handset, an integrated circuit (IC) or a set of ICs (e.g., a chip set). Various components, modules, or units are described in this disclosure to emphasize functional aspects of devices configured to perform the disclosed techniques, but do not necessarily require realization by different hardware units. Rather, as described above, various units may be combined in a codec hardware unit or provided by a collection of interoperative hardware units, including one or more processors as described above, in conjunction with suitable software and/or firmware.

The computer-readable non-transitory media includes all types of computer readable media, including magnetic storage media, optical storage media, and solid state storage media and specifically excludes signals. It should be understood that the software can be installed in and sold with a router, client, or other network device. Alternatively the software can be obtained and loaded into a device, including obtaining the software via a disc medium or from any manner of network or distribution system, including, for example, from a server owned by the software creator or from a server not owned but used by the software creator. The software can be stored on a server for distribution over the Internet, for example.

In the claims, the word "comprising" does not exclude other elements or steps, and the indefinite article "a" or "an" does not exclude a plurality. A single processor or other unit may fulfill the functions of several items recited in the claims. The mere fact that certain measures are recited in mutually different dependent claims does not indicate, preclude or suggest that a combination of these measures cannot be used to advantage. A computer program may be stored or distributed on a suitable medium, such as an optical storage medium or a solid-state medium supplied together with, or as part of, other hardware, but may also be distributed in other forms, such as via the Internet or other wired or wireless telecommunication systems.

The foregoing detailed description has been presented for purposes of illustration and description. It is not intended to be exhaustive or to limit the subject matter claimed herein to the precise form(s) disclosed. Many modifications and variations are possible in light of the above teachings. The described embodiments were chosen in order to best explain the principles of the disclosed technology and its practical application to thereby enable others skilled in the art to best utilize the technology in various embodiments and with various modifications as are suited to the particular use contemplated. It is intended that the scope of the disclosure be defined by the claims appended hereto.

## Claims

1. A key provisioning method, implemented by a first device, wherein the first device is one of a plurality of first devices mounted in a vehicle, and the method comprises:
receiving (S501) from a second device an access request for requesting to access the first device;
determining (S502), based on the access request, whether the second device is permitted to access the first device;
sending (S503) an access response to the second device based on the determination;
wherein the method is **characterized in** further comprising:
receiving (S504) only one first provisioning message from the second device if the access response is a positive access response indicating that the second device is permitted to access the first device, wherein the only one first provisioning message comprises provisioning data for generating a group key, and the only one first provisioning message is used by each of the plurality of first devices in the vehicle to self-generate the group key; and
generating (S505) the group key according to the provisioning data.

2. The method as claimed in claim 1, wherein the determining, based on the access request, whether the second device is permitted to access the first device comprises:
upon triggering of the access request, sending to the second device an authentication request for verifying an authority of the second device;
receiving from the second device an access token matched with the authentication request;
determining whether the received access token is valid;
wherein the sending the access response to the second device based on the determination comprises:
upon determining that the received access token is valid, sending a positive access response to the second device; and
upon determining that the received access token is invalid, sending a negative access response to the second device.

3. The method as claimed in claim 1 or 2, wherein before the receiving from the second device the access request, the method further comprises:
acquiring local provisioning data from a server, wherein the local provisioning data comprises a provisioning key, a public key and a local timestamp, the provisioning key is configured to generate the group key, the public key is configured to verify an authority of the second device, and the local timestamp is configured to verify a validity of the generated provisioning key.

4. The method as claimed in claim 3, wherein the provisioning data comprises a random string encrypted by the provisioning key, a provisioning timestamp encrypted by the provisioning key and a verification signature;
wherein the generating the group key according to the provisioning data comprises:
decrypting the provisioning data by using the provisioning key to obtain the random string and the provisioning timestamp;
generating the group key according to the random string and the provisioning timestamp; and
verifying the validity of the generated provisioning key according to the verification signature.

5. The method as claimed in claim 3 or 4, wherein the access token comprises a to-be-verified credential generated based on a first pre-defined algorithm, a to-be-verified counter, a to-be-verified timestamp, at least one to-be-verified vehicle identity and a to-be-verified signature;
wherein the determining whether the received access token is valid comprises:
determining that the received access token is invalid if a condition is satisfied, wherein the condition comprises any one or more of the following: a local credential generated based on a local counter and the first pre-defined algorithm being inconsistent with the to-be-verified credential, the local counter being inconsistent with the to-be-verified counter, the local timestamp being later than the to-be-verified timestamp, an identity of a vehicle to which the first device belongs being inconsistent with the at least one to-be-verified vehicle identity, a failure of checking the to-be-verified signature with the public key.

6. The method as claimed in claim 5, wherein the access token comprises any one or more of the following: a vehicle type, a device type and a list of device identities.

7. The method as claimed in claim 5 or 6, wherein the authentication request comprises the local counter, the local counter is configured to reflect a provisioning state of the first device and a value of the counter is changed based on a preset rule by the first device once the provisioning state of the first device changes.

8. A key provisioning method, implemented by a second device and comprising:
sending (S501) to a first device an access request for requesting to access the first device, wherein the first device is one of a plurality of first devices mounted in a vehicle;
receiving (S503) an access response from the first device, wherein the access response is returned by the first device based on the access request; wherein the method is **characterized in** further comprising:
sending (S504) only one first provisioning message to the first device if the access response is a positive access response indicating that the second device is permitted to access the first device, wherein the only one first provisioning message comprises provisioning data for generating a group key by the first device, and the only one first provisioning message is used by each of the plurality of first devices in the vehicle to self-generate the group key.

9. The method as claimed in claim 8, wherein before the sending to the first device the access request for requesting to access the first device, the method further comprises:
sending to a server a token request for requesting an access token corresponding to the group key, wherein the token request comprises one or more identities of vehicles which the second device plans to provision and a vehicle to which the first device belongs is comprised in the vehicles; and
receiving from the server the access token corresponding to the group key and a second provisioning message corresponding to the access token.

10. The method as claimed in claim 9, wherein before the receiving the access response from the first device, the method further comprises:
receiving from the first device an authentication request for verifying an authority of the second device;
determining an access token matched with the authentication request; and
sending the access token matched with the authentication request to the first device.

11. The method as claimed in claim 10, wherein the determining the access token matched with the authentication request comprises:
determining a provisioning state of the first device according to the authentication request; and
upon determining that the group key of the first device is not generated by the first device, using the access token corresponding to the group key as the access token matched with the authentication request.

12. The method as claimed in claim 10 or 11, wherein the receiving the access response from the first device comprises:
receiving a negative access response from the first device:
before the sending the only one first provisioning message to the first device, the method further comprises:
sending to the server a token update request for updating an access token for the first device, and receiving from the server an updated access token as the access token corresponding to the group key.

13. A first device (1800), configured to perform the method as claimed in any one of claims 1-7.

14. A second device (1900), configured to perform the method as claimed in any one of claims 8-12.

15. A vehicle comprising a first device as claimed in claim 13.

## Patentansprüche

1. Schlüsselbereitstellungsverfahren, das durch eine erste Vorrichtung implementiert ist, wobei die erste Vorrichtung eine von einer Vielzahl von in einem Fahrzeug montierten ersten Vorrichtungen ist und das Verfahren Folgendes umfasst:
Empfangen (S501) einer Zugriffsanforderung von einer zweiten Vorrichtung, um anzufordern, auf die erste Vorrichtung zuzugreifen;
Bestimmen (S502), ob der zweiten Vorrichtung gestattet ist, auf die erste Vorrichtung zuzugreifen, basierend auf der Zugriffsanforderung;
Senden (S503) einer Zugriffsantwort an die zweite Vorrichtung basierend auf der Bestimmung;
wobei das Verfahren **dadurch gekennzeichnet ist, dass** es ferner Folgendes umfasst:
Empfangen (S504) nur einer ersten Bereitstellungsnachricht von der zweiten Vorrichtung, wenn die Zugriffsantwort eine positive Zugriffsantwort ist, die anzeigt, dass der zweiten Vorrichtung gestattet ist, auf die erste Vorrichtung zuzugreifen, wobei die nur eine erste Bereitstellungsnachricht Bereitstellungsdaten zum Generieren eines Gruppenschlüssels umfasst und die nur eine erste Bereitstellungsnachricht von jeder der Vielzahl von ersten Vorrichtungen in dem Fahrzeug verwendet wird, um den Gruppenschlüssel selbst zu generieren; und
Generieren (S505) des Gruppenschlüssels gemäß den Bereitstellungsdaten.

2. Verfahren nach Anspruch 1, wobei das auf der Zugriffsanforderung basierende Bestimmen, ob der zweiten Vorrichtung gestattet ist, auf die erste Vorrichtung zuzugreifen, Folgendes umfasst:
Senden einer Authentifizierungsanforderung an die zweite Vorrichtung zum Verifizieren einer Autorität der zweiten Vorrichtung nach Auslösen der Zugriffsanforderung;
Empfangen eines Zugriffstokens, das mit der Authentifizierungsanforderung übereinstimmt, von der zweiten Vorrichtung;
Bestimmen, ob das empfangene Zugriffstoken gültig ist;
wobei das auf der Bestimmung basierende Senden der Zugriffsantwort an die zweite Vorrichtung Folgendes umfasst:
Senden einer positiven Zugriffsantwort an die zweite Vorrichtung nach dem Bestimmen, dass das empfangene Zugriffstoken gültig ist; und
Senden einer negativen Zugriffsantwort an die zweite Vorrichtung nach dem Bestimmen, dass das empfangene Zugriffstoken ungültig ist.

3. Verfahren nach Anspruch 1 oder 2, wobei das Verfahren vor dem Empfangen der Zugriffsanforderung von der zweiten Vorrichtung ferner Folgendes umfasst:
Abrufen lokaler Bereitstellungsdaten von einem Server, wobei die lokalen Bereitstellungsdaten einen Bereitstellungsschlüssel, einen öffentlichen Schlüssel und einen lokalen Zeitstempel umfassen, der Bereitstellungsschlüssel konfiguriert ist, um den Gruppenschlüssel zu generieren, der öffentliche Schlüssel konfiguriert ist, um eine Autorität der zweiten Vorrichtung zu verifizieren, und der lokale Zeitstempel konfiguriert ist, um eine Gültigkeit des generierten Bereitstellungsschlüssels zu verifizieren.

4. Verfahren nach Anspruch 3, wobei die Bereitstellungsdaten eine durch den Bereitstellungsschlüssel verschlüsselte Zufallszeichenfolge, einen durch den Bereitstellungsschlüssel verschlüsselten Bereitstellungszeitstempel und eine Verifizierungssignatur umfassen;
wobei das Generieren des Gruppenschlüssels gemäß den Bereitstellungsdaten Folgendes umfasst:
Entschlüsseln der Bereitstellungsdaten mithilfe des Bereitstellungsschlüssels, um die Zufallszeichenfolge und den Bereitstellungszeitstempel zu erlangen;
Generieren des Gruppenschlüssels gemäß der Zufallszeichenfolge und dem Bereitstellungszeitstempel; und
Verifizieren der Gültigkeit des generierten Bereitstellungsschlüssels gemäß der Verifizierungssignatur.

5. Verfahren nach Anspruch 3 oder 4, wobei das Zugriffstoken einen zu verifizierenden Berechtigungsnachweis umfasst, der basierend auf einem ersten vordefinierten Algorithmus, einem zu verifizierenden Zähler, einem zu verifizierenden Zeitstempel, mindestens einer zu verifizierenden Fahrzeugidentität und einer zu verifizierenden Signatur generiert wird;
wobei das Bestimmen, ob das empfangene Zugriffstoken gültig ist, Folgendes umfasst:
Bestimmen, dass das empfangene Zugriffstoken ungültig ist, wenn eine Bedingung erfüllt ist, wobei die Bedingung ein beliebiges oder mehrere der folgenden Elemente umfasst: einen lokalen Berechtigungsnachweis, der basierend auf einem lokalen Zähler und dem ersten vordefinierten Algorithmus generiert wird, stimmt nicht mit dem zu verifizierenden Berechtigungsnachweis überein, der lokale Zähler stimmt nicht mit dem zu verifizierenden Zähler überein, der lokale Zeitstempel ist später als der zu verifizierende Zeitstempel, eine Identität eines Fahrzeugs, zu dem die erste Vorrichtung gehört, stimmt nicht mit der mindestens einen zu verifizierenden Fahrzeugidentität überein, ein Fehlschlagen des Prüfens der zu verifizierenden Signatur mit dem öffentlichen Schlüssel.

6. Verfahren nach Anspruch 5, wobei das Zugriffstoken ein beliebiges oder mehrere der folgenden Elemente umfasst: einen Fahrzeugtyp, einen Vorrichtungstyp und eine Liste von Vorrichtungsidentitäten.

7. Verfahren nach Anspruch 5 oder 6, wobei die Authentifizierungsanforderung den lokalen Zähler umfasst, der lokale Zähler konfiguriert ist, um einen Bereitstellungsstatus der ersten Vorrichtung widerzuspiegeln, und ein Wert des Zählers basierend auf einer voreingestellten Regel durch die erste Vorrichtung geändert wird, sobald sich der Bereitstellungsstatus der ersten Vorrichtung ändert.

8. Schlüsselbereitstellungsverfahren, das von einer zweiten Vorrichtung implementiert ist und Folgendes umfasst:
Senden (S501) einer Zugriffsanforderung an ein erste Vorrichtung, um anzufordern, auf die erste Vorrichtung zuzugreifen, wobei die erste Vorrichtung eine von einer Vielzahl von in einem Fahrzeug montierten ersten Vorrichtungen ist;
Empfangen (S503) einer Zugriffsantwort von der ersten Vorrichtung, wobei die Zugriffsantwort von der ersten Vorrichtung basierend auf der Zugriffsanforderung zurückgegeben wird; wobei das Verfahren **dadurch gekennzeichnet ist, dass** es ferner Folgendes umfasst:
Senden (S504) nur einer ersten Bereitstellungsnachricht an die erste Vorrichtung, wenn die Zugriffsantwort eine positive Zugriffsantwort ist, die anzeigt, dass der zweiten Vorrichtung gestattet ist, auf die erste Vorrichtung zuzugreifen, wobei die nur eine erste Bereitstellungsnachricht Bereitstellungsdaten zum Generieren eines Gruppenschlüssels durch die erste Vorrichtung umfasst und die nur eine erste Bereitstellungsnachricht von jeder der Vielzahl von ersten Vorrichtungen im Fahrzeug verwendet wird, um den Gruppenschlüssel selbst zu generieren.

9. Verfahren nach Anspruch 8, wobei das Verfahren vor dem Senden der Zugriffsanforderung an die erste Vorrichtung, um anzufordern, auf die erste Vorrichtung zuzugreifen, ferner Folgendes umfasst:
Senden einer Tokenanforderung an einen Server, um einen Zugriffstoken anzufordern, das dem Gruppenschlüssel entspricht, wobei die Tokenanforderung eine oder mehrere Identitäten von Fahrzeugen umfasst, die die zweite Vorrichtung bereitzustellen plant, und ein Fahrzeug, zu dem die erste Vorrichtung gehört, von den Fahrzeugen umfasst ist; und
Empfangen des Zugriffstokens, das dem Gruppenschlüssel entspricht, und einer zweiten Bereitstellungsnachricht, die dem Zugriffstoken entspricht, von dem Server.

10. Verfahren nach Anspruch 9, wobei das Verfahren vor dem Empfangen der Zugriffsantwort von der ersten Vorrichtung ferner Folgendes umfasst:
Empfangen einer Authentifizierungsanforderung von der ersten Vorrichtung zum Verifizieren einer Autorität der zweiten Vorrichtung;
Bestimmen eines Zugriffstokens, das mit der Authentifizierungsanforderung übereinstimmt; und
Senden des Zugriffstokens, das mit der Authentifizierungsanforderung übereinstimmt, an die erste Vorrichtung.

11. Verfahren nach Anspruch 10, wobei das Bestimmen des Zugriffstokens, das mit der Authentifizierungsanforderung übereinstimmt, Folgendes umfasst:
Bestimmen eines Bereitstellungszustands der ersten Vorrichtung gemäß der Authentifizierungsanforderung; und
Verwenden des Zugriffstokens, das dem Gruppenschlüssel entspricht, als Zugriffstoken, das mit der Authentifizierungsanforderung übereinstimmt, nach dem Bestimmen, dass der Gruppenschlüssel der ersten Vorrichtung nicht von der ersten Vorrichtung generiert ist.

12. Verfahren nach Anspruch 10 oder 11, wobei das Empfangen der Zugriffsantwort von der ersten Vorrichtung Folgendes umfasst:
Empfangen einer negativen Zugriffsantwort von der ersten Vorrichtung;
wobei das Verfahren vor dem Senden der nur einen ersten Bereitstellungsnachricht an die erste Vorrichtung ferner Folgendes umfasst:
Senden einer Tokenaktualisierungsanforderung an den Server zum Aktualisieren eines Zugriffstokens für die erste Vorrichtung und Empfangen eines aktualisierten Zugriffstokens von dem Server als das Zugriffstoken, das dem Gruppenschlüssel entspricht.

13. Erste Vorrichtung (1800), die konfiguriert ist, um das Verfahren nach einem der Ansprüche 1-7 durchzuführen.

14. Zweite Vorrichtung (1900), die konfiguriert ist, um das Verfahren nach einem der Ansprüche 8-12 durchzuführen.

15. Fahrzeug, das eine erste Vorrichtung nach Anspruch 13 umfasst.

## Revendications

1. Procédé de fourniture de clé, mis en œuvre par un premier dispositif, dans lequel le premier dispositif est l'un d'une pluralité de premiers dispositifs montés dans un véhicule, et le procédé comprend :
la réception (S501) de la part d'un second dispositif d'une demande d'accès pour demander à accéder au premier dispositif ;
le fait de déterminer (S502), sur la base de la demande d'accès, si le second dispositif est autorisé à accéder au premier dispositif ;
l'envoi (S503) d'une réponse d'accès au second dispositif sur la base de la détermination ;
dans lequel le procédé est **caractérisé en ce qu'**il comprend également :
la réception (S504) d'un seul premier message de provisionnement de la part du second dispositif si la réponse d'accès est une réponse d'accès positive indiquant que le second dispositif est autorisé à accéder au premier dispositif, dans lequel le seul premier message de provisionnement comprend des données de provisionnement pour générer une clé de groupe, et le seul premier message de provisionnement est utilisé par chacun de la pluralité de premiers dispositifs dans le véhicule pour auto-générer la clé de groupe ; et
la génération (S505) de la clé de groupe selon les données de provisionnement.

2. Procédé selon la revendication 1, dans lequel le fait de déterminer, sur la base de la demande d'accès, si le second dispositif est autorisé à accéder au premier dispositif comprend :
lors du déclenchement de la demande d'accès, l'envoi au second dispositif d'une demande d'authentification pour vérifier une autorité du second dispositif ;
la réception de la part du second dispositif d'un jeton d'accès correspondant à la demande d'authentification ;
le fait de déterminer si le jeton d'accès reçu est valide ;
dans lequel l'envoi de la réponse d'accès au second dispositif sur la base de la détermination comprend :
lors de la détermination que le jeton d'accès reçu est valide, l'envoi d'une réponse d'accès positive au second dispositif ; et
lors de la détermination que le jeton d'accès reçu est invalide, l'envoi d'une réponse d'accès négative au second dispositif.

3. Procédé selon la revendication 1 ou 2, dans lequel, avant la réception de la part du second dispositif de la demande d'accès, le procédé comprend également :
l'acquisition de données de provisionnement locales à partir d'un serveur, dans lequel les données de provisionnement locales comprennent une clé de provisionnement, une clé publique et un horodatage local, la clé de provisionnement est configurée pour générer la clé de groupe, la clé publique est configurée pour vérifier une autorité du second dispositif, et l'horodatage local est configuré pour vérifier une validité de la clé de provisionnement générée.

4. Procédé selon la revendication 3, dans lequel les données de provisionnement comprennent une chaîne aléatoire chiffrée par la clé de provisionnement, un horodatage de provisionnement chiffré par la clé de provisionnement et une signature de vérification ; dans lequel la génération de la clé de groupe selon les données de provisionnement comprend :
le déchiffrage des données de provisionnement à l'aide de la clé de provisionnement pour obtenir la chaîne aléatoire et l'horodatage de provisionnement ;
la génération de la clé de groupe selon la chaîne aléatoire et l'horodatage de provisionnement ; et
la vérification de la validité de la clé de provisionnement générée selon la signature de vérification.

5. Procédé selon la revendication 3 ou 4, dans lequel le jeton d'accès comprend un identifiant à vérifier généré sur la base d'un premier algorithme prédéfini, d'un compteur à vérifier, d'un horodatage à vérifier, d'au moins une identité de véhicule à vérifier et d'une signature à vérifier ;
dans lequel le fait de déterminer si le jeton d'accès reçu est valide comprend :
la détermination que le jeton d'accès reçu est invalide si une condition est satisfaite, dans lequel la condition comprend l'un quelconque ou plusieurs des éléments suivants : un identifiant local généré sur la base d'un compteur local et du premier algorithme prédéfini étant incompatible avec l'identifiant à vérifier, le compteur local étant incompatible avec le compteur à vérifier, l'horodatage local étant postérieur à l'horodatage à vérifier, une identité d'un véhicule auquel appartient le premier dispositif étant incompatible avec l'au moins une identité de véhicule à vérifier, un échec de vérification de la signature à vérifier avec la clé publique.

6. Procédé selon la revendication 5, dans lequel le jeton d'accès comprend l'un quelconque ou plusieurs des éléments suivants : un type de véhicule, un type de dispositif et une liste d'identités de dispositifs.

7. Procédé selon la revendication 5 ou 6, dans lequel la demande d'authentification comprend le compteur local, le compteur local est configuré pour refléter un état de provisionnement du premier dispositif et une valeur du compteur est modifiée sur la base d'une règle prédéfinie par le premier dispositif une fois que l'état de provisionnement du premier dispositif change.

8. Procédé de fourniture de clé, mis en œuvre par un second dispositif et comprenant :
l'envoi (S501) à un premier dispositif d'une demande d'accès pour demander l'accès au premier dispositif, dans lequel le premier dispositif est l'un d'une pluralité de premiers dispositifs montés dans un véhicule ;
la réception (S503) d'une réponse d'accès de la part du premier dispositif, dans lequel la réponse d'accès est renvoyée par le premier dispositif sur la base de la demande d'accès ; dans lequel le procédé est **caractérisé en ce qu'**il comprend également :
l'envoi (S504) d'un seul premier message de provisionnement au premier dispositif si la réponse d'accès est une réponse d'accès positive indiquant que le second dispositif est autorisé à accéder au premier dispositif, dans lequel le seul premier message de provisionnement comprend des données de provisionnement pour la génération d'une clé de groupe par le premier dispositif, et le seul premier message de provisionnement est utilisé par chacun de la pluralité de premiers dispositifs dans le véhicule pour auto-générer la clé de groupe.

9. Procédé selon la revendication 8, dans lequel, avant d'envoyer au premier dispositif la demande d'accès pour demander l'accès au premier dispositif, le procédé comprend également :
l'envoi à un serveur d'une demande de jeton pour demander un jeton d'accès correspondant à la clé de groupe, dans lequel la demande de jeton comprend une ou plusieurs identités de véhicules que le second dispositif prévoit de provisionner et un véhicule auquel appartient le premier dispositif est compris dans les véhicules ; et
la réception de la part du serveur du jeton d'accès correspondant à la clé de groupe et un second message de provisionnement correspondant au jeton d'accès.

10. Procédé selon la revendication 9, dans lequel, avant la réception de la réponse d'accès de la part du premier dispositif, le procédé comprend également :
la réception de la part du premier dispositif d'une demande d'authentification pour vérifier une autorité du second dispositif ;
la détermination d'un jeton d'accès correspondant à la demande d'authentification ; et
l'envoi du jeton d'accès correspondant à la demande d'authentification au premier dispositif.

11. Procédé selon la revendication 10, dans lequel la détermination du jeton d'accès correspondant à la demande d'authentification comprend :
la détermination d'un état de provisionnement du premier dispositif selon la demande d'authentification ; et
lors de la détermination que la clé de groupe du premier dispositif n'est pas générée par le premier dispositif, l'utilisation du jeton d'accès correspondant à la clé de groupe comme jeton d'accès correspondant à la demande d'authentification.

12. Procédé selon la revendication 10 ou 11, dans lequel la réception de la réponse d'accès de la part du premier dispositif comprend :
la réception d'une réponse d'accès négative de la part du premier dispositif ;
avant d'envoyer le seul premier message de provisionnement au premier dispositif, le procédé comprend également :
l'envoi au serveur d'une demande de mise à jour de jeton pour mettre à jour un jeton d'accès pour le premier dispositif, et la réception de la part du serveur d'un jeton d'accès mis à jour comme jeton d'accès correspondant à la clé de groupe.

13. Premier dispositif (1800), configuré pour réaliser le procédé selon l'une quelconque des revendications 1 à 7.

14. Second dispositif (1900), configuré pour réaliser le procédé selon l'une quelconque des revendications 8 à 12.

15. Véhicule comprenant un premier dispositif selon la revendication 13.
